(19) Europäisches Patentamt / European Patent Office / Office européen des brevets

(11) **EP 4 657 936 A1**

(12) **EUROPEAN PATENT APPLICATION**
published in accordance with Art. 153(4) EPC

(43) Date of publication:
**03.12.2025  Bulletin 2025/49**

(21) Application number: **24791867.5**

(22) Date of filing: **07.04.2024**

(51) International Patent Classification (IPC):
**H04W 64/00** (2009.01)    **H04W 4/02** (2018.01)

(52) Cooperative Patent Classification (CPC):
**H04L 5/00; H04W 4/02; H04W 64/00; H04W 72/25**

(86) International application number:
**PCT/CN2024/086432**

(87) International publication number:
**WO 2024/217282 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.04.2023  CN 202310433336**
**11.08.2023  CN 202311018447**

(71) Applicant: **Huawei Technologies Co., Ltd.**
**Shenzhen, Guangdong 518129 (CN)**

(72) Inventors:
• **ZHANG, Heng**
**Shenzhen, Guangdong 518129 (CN)**
• **LI, Cheng**
**Shenzhen, Guangdong 518129 (CN)**
• **HUANG, Su**
**Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **SIDELINK COMMUNICATION METHOD AND APPARATUS**

(57) A sidelink communication method and an apparatus are provided, to flexibly configure a sidelink positioning reference signal sequence identifier, so as to meet positioning demands of different privacy requirements. A first terminal device sends sidelink control information to a second terminal device, where the sidelink control information includes indication information used to determine the sidelink positioning reference signal sequence identifier. The first terminal device generates a sidelink positioning reference signal based on the sidelink positioning reference signal sequence identifier, and sends the sidelink positioning reference signal to the second terminal device. The second terminal device determines the sidelink positioning reference signal sequence identifier based on the indication information, and receives the sidelink positioning reference signal based on the sidelink positioning reference signal sequence identifier. The sidelink positioning reference signal sequence identifier is a first-type identifier or a second-type identifier, and configuration manners of the first-type identifier and the second-type identifier are different. Therefore, the sidelink positioning reference signal sequence identifier is flexibly configured, to meet positioning demands of different privacy requirements.

FIG. 4

**Description**

CROSS-REFERENCE TO RELATED APPLICATIONS

This application claims priorities to Chinese Patent Application No. 202310433336.6, filed with the China National Intellectual Property Administration on April 17, 2023 and entitled "SIDELINK COMMUNICATION METHOD AND APPARATUS", and to Chinese Patent Application No. 202311018447.7, filed with the China National Intellectual Property Administration on August 11, 2023 and entitled "SIDELINK COMMUNICATION METHOD AND APPARATUS", both of which are incorporated herein by reference in their entireties.

TECHNICAL FIELD

This application relates to the field of communication technologies, and in particular, to a sidelink communication method and an apparatus.

BACKGROUND

Currently, sidelink (sidelink, SL) positioning is an important research direction. A basic condition of SL positioning is to send an SL-positioning reference signal (positioning reference signal, PRS). In a current research, one of necessary conditions for generating the SL-PRS is an SL-PRS sequence identifier (identifier, ID). However, a configuration manner of the SL-PRS sequence ID has not been specified currently.

SUMMARY

This application provides a sidelink communication method and an apparatus, to flexibly configure a sidelink positioning reference signal sequence identifier, so as to meet positioning demands of different privacy requirements.

According to a first aspect, this application provides a sidelink communication method. The method may be applied to a first terminal device or a module (for example, a processor, a chip, or a chip system) in the first terminal device. The first terminal device is used as an example. The method may include: The first terminal device sends sidelink control information to a second terminal device, where the sidelink control information includes indication information, and the indication information is used to determine a sidelink positioning reference signal sequence identifier. The first terminal device generates a sidelink positioning reference signal based on the sidelink positioning reference signal sequence identifier, and sends the sidelink positioning reference signal to the second terminal device. The sidelink positioning reference signal sequence identifier is a first-type identifier or a second-type identifier, and configuration manners of the first-type identifier and the second-type identifier are different.

Based on the foregoing sidelink communication method, whether the current sidelink positioning reference signal sequence identifier is the first-type identifier or the second-type identifier may be determined by including the indication information in the sidelink control information, so that the sidelink positioning reference signal sequence identifier can be flexibly configured, to meet positioning demands of different privacy requirements.

In a possible design, the first terminal device receives response information from the second terminal device, where the response information includes a measurement result of the sidelink positioning reference signal. In this way, the first terminal device may determine a location of the first terminal device.

In a possible design, the second terminal device receives the sidelink control information from the first terminal device, where the sidelink control information includes the indication information. The second terminal device determines the sidelink positioning reference signal sequence identifier based on the indication information. The second terminal device receives the sidelink positioning reference signal from the first terminal device based on the sidelink positioning reference signal sequence identifier. In this way, the second terminal device may accurately receive the sidelink positioning reference signal, to perform subsequent positioning measurement.

In a possible design, the second terminal device measures the sidelink positioning reference signal. The second terminal device sends response information to the first terminal device, where the response information includes a measurement result of the sidelink positioning reference signal. In this way, the second terminal device may implement positioning measurement, to determine a location of the first terminal device.

According to a second aspect, this application provides a sidelink communication method. The method may be applied to a second terminal device or a module (for example, a processor, a chip, or a chip system) in the second terminal device. The second terminal device is used as an example. The method may include: The second terminal device receives sidelink control information from a first terminal device, where the sidelink control information includes indication information, and the indication information is used to determine a sidelink positioning reference signal sequence identifier. The second terminal device determines the sidelink positioning reference signal sequence identifier based on the indication information. The second terminal device receives a sidelink positioning reference signal from the first terminal device based on the sidelink positioning reference signal sequence identifier. The sidelink positioning reference signal sequence identifier is a first-type identifier or a second-type identifier, and configuration manners of the first-type identifier and the second-type identifier are different.

Based on the foregoing sidelink communication method, whether the current sidelink positioning reference signal sequence identifier is the first-type identifier or the second-type identifier may be determined by including the indication information in the sidelink control information, so that the sidelink positioning reference signal sequence identifier can be flexibly configured, to meet positioning demands of different privacy requirements.

In a possible design, the second terminal device measures the sidelink positioning reference signal. The second terminal device sends response information to the first terminal device, where the response information includes a measurement result of the sidelink positioning reference signal. In this way, the second terminal device may implement positioning measurement, to determine a location of the first terminal device.

With reference to the first aspect or the second aspect, in a possible design, the indication information includes a first bit. That the indication information is used to determine the sidelink positioning reference signal sequence identifier includes: When a value of the first bit is a first value, the indication information indicates that a configuration manner of the sidelink positioning reference signal sequence identifier is a first configuration manner, and the first configuration manner is used to determine that the sidelink positioning reference signal sequence identifier is the first-type identifier; or when a value of the first bit is a second value, the indication information indicates that a configuration manner of the sidelink positioning reference signal sequence identifier is a second configuration manner, and the second configuration manner is used to determine that the sidelink positioning reference signal sequence identifier is the second-type identifier. In this way, whether the current sidelink positioning reference signal sequence identifier is the first-type identifier or the second-type identifier may be determined by using the indication information, so that the sidelink positioning reference signal sequence identifier can be flexibly configured, to meet positioning demands of different privacy requirements.

With reference to the first aspect or the second aspect, in a possible design, the indication information includes a plurality of bits, and different values of the plurality of bits indicate different sidelink positioning reference signal sequence identifiers. A sidelink positioning reference signal sequence identifier corresponding to any one of the different values is one of the following: a sidelink positioning reference signal sequence identifier that is configured as the first-type identifier based on the first configuration manner, or a sidelink positioning reference signal sequence identifier that is configured as the second-type identifier based on the second configuration manner. In this way, whether the current sidelink positioning reference signal sequence identifier is the first-type identifier or the second-type identifier may be determined by using the indication information, so that the sidelink positioning reference signal sequence identifier can be flexibly configured, to meet positioning demands of different privacy requirements.

With reference to the first aspect or the second aspect, in a possible design, the first configuration manner is a manner of configuring a sidelink positioning reference signal sequence identifier based on a sidelink positioning protocol (sidelink positioning protocol, SLPP), and the second configuration manner is at least one of the following configuration manners: a manner of preconfiguring a sidelink positioning reference signal sequence identifier for a resource pool, a manner of configuring a sidelink positioning reference signal sequence identifier based on a physical sidelink control channel (physical sidelink control channel, PSCCH) cyclic redundancy check (cyclic redundancy check, CRC), a manner of configuring a sidelink positioning reference signal sequence identifier based on a transmit-end identifier of the sidelink control information, or a manner of configuring a sidelink positioning reference signal sequence identifier based on a receive-end identifier of the sidelink control information. In this way, the sidelink positioning reference signal sequence identifier may be flexibly configured, to meet positioning demands of different privacy requirements.

With reference to the first aspect or the second aspect, in a possible design, the first-type identifier is a private identifier, and the second-type identifier is a non-private identifier. In this way, the sidelink positioning reference signal sequence identifier may be flexibly configured, to meet positioning demands of different privacy requirements.

With reference to the first aspect or the second aspect, in a possible design, the sidelink control information further includes measurement request information, and the measurement request information is used to request the second terminal device to receive and measure the sidelink positioning reference signal. In this way, the second terminal device may subsequently perform positioning measurement, to determine a location of the first terminal device.

According to a third aspect, this application further provides a communication apparatus. The communication apparatus may be used in a first terminal device, and the communication apparatus has a function of implementing the method in the first aspect or the possible design examples of the first aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform detailed descriptions in the first aspect or the possible design examples of the first aspect. Details are not described herein again.

In a possible design, a structure of the communication apparatus includes a transceiver and a processor, and optionally further includes a memory. The transceiver is configured to receive and send a signal, data, a message, information, or the like, and is configured to communicate and interact with another device in a communication system. The processor is configured to support the communication apparatus in performing the corresponding function in the first aspect or the possible design examples of the first aspect. The memory is coupled to the processor, and the memory stores program instructions and data that are necessary for the communication apparatus.

In a possible manner, the communication apparatus may be a chip. The chip may include an input/output interface and a processor. The input/output interface is configured to receive and send a signal, data, a message, information, or the like, and is configured to communicate and interact with another device in a communication system. The processor is configured to support the communication apparatus in performing the corresponding function in the first aspect or the possible design examples of the first aspect.

According to a fourth aspect, this application further provides a communication apparatus. The communication apparatus may be used in a second terminal device, and the communication apparatus has a function of implementing the method in the second aspect or the possible design examples of the second aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform detailed descriptions in the second aspect or the possible design examples of the second aspect. Details are not described herein again.

In a possible design, a structure of the communication apparatus includes a transceiver and a processor, and optionally further includes a memory. The transceiver is configured to receive and send a signal, data, a message, information, or the like, and is configured to communicate and interact with another device in a communication system. The processor is configured to support the communication apparatus in performing the corresponding function in the second aspect or the possible design examples of the second aspect. The memory is coupled to the processor, and the memory stores program instructions and data that are necessary for the communication apparatus.

In a possible manner, the communication apparatus may be a chip. The chip may include an input/output interface and a processor. The input/output interface is configured to receive and send a signal, data, a message, information, or the like, and is configured to communicate and interact with another device in a communication system. The processor is configured to support the communication apparatus in performing the corresponding function in the second aspect or the possible design examples of the second aspect.

According to a fifth aspect, an embodiment of this application provides a communication system, which may include the foregoing first terminal device, the foregoing second terminal device, and the like.

According to a sixth aspect, an embodiment of this application provides a computer-readable storage medium. The computer-readable storage medium stores program instructions, and when the program instructions are run on a computer, the computer is enabled to perform the method in the first aspect and any possible design of the first aspect or the second aspect and any possible design of the second aspect in embodiments of this application. For example, the computer-readable storage medium may be any usable medium that can be accessed by the computer. By way of example but not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a seventh aspect, an embodiment of this application provides a computer program product, including instructions. When the instructions are run on a computer, the method in the first aspect or any possible design of the first aspect, or the method in the second aspect or any possible design of the second aspect is performed.

According to an eighth aspect, this application further provides a chip, including a processor. The processor is coupled to a memory, and is configured to read and execute program instructions stored in the memory, so that the chip implements the method in the first aspect or any possible design of the first aspect, or the method in the second aspect or any possible design of the second aspect.

For each of the third aspect to the eighth aspect and technical effects that can be achieved by the aspect, refer to the foregoing descriptions of the technical effects that can be achieved by the first aspect, the possible solutions in the first aspect, the second aspect, or the possible solutions in the second aspect. Details are not described herein again.

According to a ninth aspect, this application provides a sidelink communication method. The method may be applied to a second terminal device or a module (for example, a processor, a chip, or a chip system) in the second terminal device. The second terminal device is used as an example. The method may include: The second terminal device receives configuration information, where the configuration information may indicate one or more first sidelink positioning reference signal sequence identifiers corresponding to one or more resource pools. The second terminal device may receive a first sidelink positioning reference signal from a first terminal device based on the first sidelink positioning reference signal sequence identifier, where the first sidelink positioning reference signal is sent by using a resource in the one or more resource pools.

According to the foregoing method, the configuration information indicates the one or more first sidelink positioning reference signal sequence identifiers corresponding to the one or more resource pools, so that for a private service, a resource pool-level sidelink positioning reference signal sequence identifier can be flexibly configured, to meet a positioning demand of a privacy requirement.

In a possible design, the second terminal device receives a second sidelink positioning reference signal from the first terminal device based on a second sidelink positioning reference signal sequence identifier, where the second sidelink positioning reference signal is sent by using a resource in a resource pool other than the one or more resource pools. In this way, for a non-private service, a signal may be sent by using a resource pool for which no private sidelink positioning reference signal sequence identifier is configured, to meet a positioning demand of a non-privacy requirement.

In a possible design, the second terminal device may receive the configuration information by using the following method: The second terminal device receives the configuration information from the first terminal device; or the second terminal device receives the configuration information from a positioning server. In this way, the second terminal device may flexibly receive the configuration information in different scenarios.

In a possible design, the second terminal device measures the first sidelink positioning reference signal, and sends a measurement result of the first sidelink positioning reference signal to the first terminal device. In this way, the second terminal device may implement positioning measurement, to determine a location of the first terminal device.

In a possible design, the second terminal device may receive measurement request information from the first terminal device, where the measurement request information is used to request the second terminal device to receive and measure the first sidelink positioning reference signal. In this way, the second terminal device may subsequently perform positioning measurement, to determine a location of the first terminal device.

In a possible design, the second terminal device measures the first sidelink positioning reference signal, and sends a measurement result of the first sidelink positioning reference signal to the positioning server. In this way, the second terminal device may implement positioning measurement, to determine a location of the first terminal device.

In a possible design, the second terminal device receives measurement request information from the positioning server, where the measurement request information is used to request the second terminal device to receive and measure the first sidelink positioning reference signal. In this way, the second terminal device may subsequently perform positioning measurement, to determine a location of the first terminal device.

According to a tenth aspect, this application provides a sidelink communication method. The method may be applied to a first terminal device or a module (for example, a processor, a chip, or a chip system) in the first terminal device. The first terminal device is used as an example. The method may include: The first terminal device determines a first sidelink positioning reference signal sequence identifier based on configuration information, where the configuration information indicates one or more first sidelink positioning reference signal sequence identifiers corresponding to one or more resource pools. The first terminal device sends a first sidelink positioning reference signal to a second terminal device based on the first sidelink positioning reference signal sequence identifier by using a resource in the one or more resource pools.

According to the foregoing method, the configuration information indicates the one or more first sidelink positioning reference signal sequence identifiers corresponding to the one or more resource pools, so that for a private service, a resource pool-level sidelink positioning reference signal sequence identifier can be flexibly configured, to meet a positioning demand of a privacy requirement.

In a possible design, the first terminal device sends a second sidelink positioning reference signal to the second terminal device based on a second sidelink positioning reference signal sequence identifier by using a resource in a resource pool other than the one or more resource pools. In this way, for a non-private service, a signal may be sent by using a resource pool for which no private sidelink positioning reference signal sequence identifier is configured, to meet a positioning demand of a non-privacy requirement.

In a possible design, the first terminal device may send the configuration information to the second terminal device. In this way, the second terminal device may determine, based on the configuration information, the one or more first sidelink positioning reference signal sequence identifiers corresponding to the one or more resource pools.

In a possible design, the first terminal device may receive the configuration information from a positioning server. In this way, the second terminal device may determine, based on the configuration information, the one or more first sidelink positioning reference signal sequence identifiers corresponding to the one or more resource pools.

In a possible design, the first terminal device receives a measurement result of the first sidelink positioning reference signal from the second terminal device. In this way, the second terminal device may implement positioning measurement, to determine a location of the first terminal device.

In a possible design, the first terminal device sends measurement request information to the second terminal device, where the measurement request information is used to request the second terminal device to receive and measure the first sidelink positioning reference signal. In this way, the second terminal device may subsequently perform positioning measurement, to determine a location of the first terminal device.

According to an eleventh aspect, this application provides a sidelink communication method. The method may be applied to a positioning server or a module (for example, a processor, a chip, or a chip system) in the positioning server. The positioning server is used as an example. The method may include: The positioning server sends configuration information to a first terminal device and a second terminal device, where the configuration information indicates one or more first sidelink positioning reference signal sequence identifiers corresponding to one or more resource pools, and sidelink communication is performed between the first terminal device and the second terminal device.

In a possible design, the positioning server receives a measurement result of a first sidelink positioning reference signal from the second terminal device, where the first sidelink positioning reference signal corresponds to the first sidelink positioning reference signal sequence identifier. In this way, the second terminal device may implement positioning measurement, to determine a location of the first terminal device.

In a possible design, the positioning server sends measurement request information to the second terminal device, where the measurement request information is used to request the second terminal device to receive and measure the first sidelink positioning reference signal. In this way, the second terminal device may subsequently perform positioning measurement, to determine a location of the first terminal device.

With reference to the ninth aspect, the tenth aspect, or the eleventh aspect, in a possible design, the configuration information may include the one or more first sidelink positioning reference signal sequence identifiers and an identifier of the one or more resource pools. In this way, the configuration information may accurately indicate the one or more first sidelink positioning reference signal sequence identifiers corresponding to the one or more resource pools.

With reference to the ninth aspect, the tenth aspect, or the eleventh aspect, in a possible design, the configuration information further includes a type of the one or more resource pools. In this way, the resource pool corresponding to the one or more first sidelink positioning reference signal sequence identifiers may be accurate.

With reference to the ninth aspect, the tenth aspect, or the eleventh aspect, in a possible design, when one or more sidelink positioning reference signal sequence identifiers are preconfigured for a first resource pool, the configuration information includes a first bit and an identifier of the first resource pool, the first bit indicates that one of the one or more sidelink positioning reference signal sequence identifiers preconfigured for the first resource pool is a first sidelink positioning reference signal sequence identifier corresponding to the first resource pool, and the first resource pool is any one of the one or more resource pools. In this way, the configuration information may accurately indicate the first sidelink positioning reference signal sequence identifier corresponding to the first resource pool.

With reference to the ninth aspect, the tenth aspect, or the eleventh aspect, in a possible design, the configuration information further includes a type of the first resource pool. In this way, the first resource pool corresponding to the first sidelink positioning reference signal sequence identifier may be accurate.

With reference to the ninth aspect, the tenth aspect, or the eleventh aspect, in a possible design, the first bit includes a plurality of bits, and different values of the plurality of bits indicate indexes of different sidelink positioning reference signal sequence identifiers in the one or more sidelink positioning reference signal sequence identifiers. In this way, the configuration information may accurately indicate the first sidelink positioning reference signal sequence identifier corresponding to the first resource pool.

With reference to the ninth aspect or the tenth aspect, in a possible design, the second sidelink positioning reference signal sequence identifier is a PSCCH CRC. In this way, a positioning demand of a non-private service may be met.

According to a twelfth aspect, this application further provides a communication apparatus. The communication apparatus may be used in a second terminal device, and the communication apparatus has a function of implementing the method in the ninth aspect or the possible design examples of the ninth aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform detailed descriptions in the ninth aspect or the possible design examples of the ninth aspect. Details are not described herein again.

In a possible design, a structure of the communication apparatus includes a transceiver and a processor, and optionally further includes a memory. The transceiver is configured to receive and send a signal, data, a message, information, or the like, and is configured to communicate and interact with another device in a communication system. The processor is configured to support the communication apparatus in performing the corresponding function in the ninth aspect or the possible design examples of the ninth aspect. The memory is coupled to the processor, and the memory stores program instructions and data that are necessary for the communication apparatus.

In a possible manner, the communication apparatus may be a chip. The chip may include an input/output interface and a processor. The input/output interface is configured to receive and send a signal, data, a message, information, or the like, and is configured to communicate and interact with another device in a communication system. The processor is configured to support the communication apparatus in performing the corresponding function in the ninth aspect or the possible design examples of the ninth aspect.

According to a thirteenth aspect, this application further provides a communication apparatus. The communication apparatus may be used in a first terminal device, and the communication apparatus has a function of implementing the method in the tenth aspect or the possible design examples of the tenth aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform detailed descriptions in the tenth aspect or the possible design examples of the tenth aspect. Details are not described herein again.

In a possible design, a structure of the communication apparatus includes a transceiver and a processor, and optionally further includes a memory. The transceiver is configured to receive and send a signal, data, a message, information, or the like, and is configured to communicate and interact with another device in a communication system. The processor is configured to support the communication apparatus in performing the corresponding function in the tenth aspect or the possible design examples of the tenth aspect. The memory is coupled to the processor, and the memory stores program instructions and data that are necessary for the communication apparatus.

In a possible manner, the communication apparatus may be a chip. The chip may include an input/output interface and a processor. The input/output interface is configured to receive and send a signal, data, a message, information, or the like, and is configured to communicate and interact with another device in a communication system. The processor is configured to support the communication apparatus in performing the corresponding function in the tenth aspect or the possible design examples of the tenth aspect.

According to a fourteenth aspect, this application further provides a communication apparatus. The communication apparatus may be used in a positioning server, and the communication apparatus has a function of implementing the method in the eleventh aspect or the possible design examples of the eleventh aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform detailed descriptions in the eleventh aspect or the possible design examples of the eleventh aspect. Details are not described herein again.

In a possible design, a structure of the communication apparatus includes a transceiver and a processor, and optionally further includes a memory. The transceiver is configured to receive and send a signal, data, a message, information, or the like, and is configured to communicate and interact with another device in a communication system. The processor is configured to support the communication apparatus in performing the corresponding function in the eleventh aspect or the possible design examples of the eleventh aspect. The memory is coupled to the processor, and the memory stores program instructions and data that are necessary for the communication apparatus.

In a possible manner, the communication apparatus may be a chip. The chip may include an input/output interface and a processor. The input/output interface is configured to receive and send a signal, data, a message, information, or the like, and is configured to communicate and interact with another device in a communication system. The processor is configured to support the communication apparatus in performing the corresponding function in the eleventh aspect or the possible design examples of the eleventh aspect.

According to a fifteenth aspect, an embodiment of this application provides a communication system, which may include the first terminal device in the tenth aspect and the possible design examples of the tenth aspect, the second terminal device in the ninth aspect and the possible design examples of the ninth aspect, and the like.

According to a sixteenth aspect, an embodiment of this application provides a communication system, which may include the first terminal device in the tenth aspect and the possible design examples of the tenth aspect, the second terminal device in the ninth aspect and the possible design examples of the ninth aspect, the positioning server in the eleventh aspect and the possible design examples of the eleventh aspect, and the like.

According to a seventeenth aspect, an embodiment of this application provides a computer-readable storage medium. The computer-readable storage medium stores program instructions, and when the program instructions are run on a computer, the computer is enabled to perform the method in the ninth aspect and any possible design of the ninth aspect, the tenth aspect and any possible design of the tenth aspect, or the eleventh aspect and any possible design of the eleventh aspect in embodiments of this application. For example, the computer-readable storage medium may be any usable medium that can be accessed by the computer. By way of example but not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to an eighteenth aspect, an embodiment of this application provides a computer program product, including instructions. When the instructions are run on a computer, the method in the ninth aspect or any possible design of the ninth aspect, the method in the tenth aspect or any possible design of the tenth aspect, or the method in the eleventh aspect or any possible design of the eleventh aspect is performed.

According to a nineteenth aspect, this application further provides a chip, including a processor. The processor is coupled to a memory, and is configured to read and execute program instructions stored in the memory, so that the chip implements the method in the ninth aspect or any possible design of the ninth aspect, the method in the tenth aspect or any possible design of the tenth aspect, or the method in the eleventh aspect or any possible design of the eleventh aspect.

For each of the twelfth aspect to the nineteenth aspect and technical effects that can be achieved by the aspect, refer to the foregoing descriptions of the technical effects that can be achieved by the ninth aspect, the possible solutions of the ninth aspect, the tenth aspect, the possible solutions of the tenth aspect, the eleventh aspect, or the possible solutions of the eleventh aspect. Details are not described herein again.

BRIEF DESCRIPTION OF DRAWINGS

FIG. 1 is a diagram of an architecture of a communication system according to an embodiment of this application;

FIG. 2 is a diagram of an architecture of another communication system according to an embodiment of this application;

FIG. 3 is a diagram of an architecture of another communication system according to an embodiment of this application;

FIG. 4 is a flowchart of a sidelink communication method according to an embodiment of this application;

FIG. 5 is a diagram of an SLPP protocol stack according to an embodiment of this application;

FIG. 6 is a diagram of a structure of a PSCCH and a PSCCH CRC according to an embodiment of this application;

FIG. 7 is a flowchart of an example of a sidelink communication method according to an embodiment of this application;

FIG. 8 is a flowchart of an example of another sidelink communication method according to an embodiment of this application;

FIG. 9 is a diagram of a structure of a communication apparatus according to an embodiment of this application;

FIG. 10 is a diagram of a structure of a communication apparatus according to an embodiment of this application;

FIG. 11 is a flowchart of another sidelink communication method according to an embodiment of this application;

FIG. 12 is a flowchart of an example of another sidelink communication method according to an embodiment of this application; and

FIG. 13 is a flowchart of an example of another sidelink communication method according to an embodiment of this application.

DESCRIPTION OF EMBODIMENTS

The following further describes in detail this application with reference to accompanying drawings.

Embodiments of this application provide a sidelink communication method and an apparatus, to flexibly configure a sidelink positioning reference signal sequence identifier, so as to meet positioning demands of different privacy requirements. The method and the apparatus in this application are based on a same technical concept. Because problem-resolving principles of the method and the apparatus are similar, mutual reference may be made to implementation of the apparatus and the method, and repeated parts are not described.

In the following, some terms in this application are explained and described, to facilitate understanding of a person skilled in the art.

(1) A Uu interface, namely, a cellular network communication interface, mainly refers to a communication interface between a terminal device and a network device, includes an uplink and a downlink, and is characterized by implementing reliable communication in a long distance and a larger range.

(2) A proximity-based services communication 5 ((proximity-based services, ProSe) communication 5, PC5) interface, namely, a direct communication interface, mainly refers to a communication interface between terminal devices. For example, the interface is a short-distance direct communication interface between vehicles, people, and road infrastructures. The interface is characterized by implementing low-latency, high-capacity, and highly-reliable communication through direct connection, broadcast, and network scheduling.

(3) A sidelink (sidelink, SL), to be specific, a link that is defined in a standard and that is used for communication on the PC5 interface, may also be referred to as a sidelink communication link, which is similar to an uplink communication link or a downlink communication link.

For example, links for device-to-device (device-to-device, D2D) communication, long term evolution (long term evolution, LTE) vehicle-to-everything (vehicle-to-everything, V2X) communication, new radio (new radio, NR) V2X communication, and sidelink on unlicensed spectrum (Sidelink on unlicensed spectrum, SL-U) communication are all sidelinks.

(4) Resource pool (resource pool, RP)

NR SL communication is performed based on the resource pool. The resource pool is a time-frequency resource dedicated to SL communication. Frequency domain resources included in the resource pool are consecutive. Time domain resources included in the resource pool may be consecutive or inconsecutive. Different resource pools are distinguished by using SL resource pool identifiers (for example, SL-ResourcePoolID). A terminal apparatus performs receiving in a receive resource pool, and performs sending in a transmit resource pool. If resource pools have a same resource pool index, it can be considered that time-frequency resources in the resource pools completely overlap. An SL resource pool may also be understood as a set of resources that can be used for SL transmission.

Two resource selection modes of an NR SL are as follows.

A resource selection mode 1 (mode 1) is a manner in which a network device selects an SL resource from the transmit resource pool for a transmit-end terminal device. The network device may select one or more (for example, three) SL resources from one transmit resource pool at a time. The resource pool may be configured by the network device, or configured by an upper layer, or preconfigured.

A resource selection mode 2 (mode 2) is a manner in which a transmit-end terminal device selects an SL resource from the transmit resource pool. The transmit-end terminal device may select one or more (for example, three) SL resources at a time. The resource pool may be configured by a network device, or configured by an upper layer, or preconfigured.

A terminal device in a radio resource control (radio resource control, RRC) connected (connected) state may be configured by the network device to use the mode 1 or the mode 2, and a terminal device in an RRC idle (idle) state or inactive (inactive) state can use only the mode 2.

(5) The terminal device may also be referred to as user equipment (user equipment, UE), a mobile station (mobile station, MS), a mobile terminal (mobile terminal, MT), or the like, and is a device that provides voice and/or data connectivity for a user. For example, the terminal device may include a handheld device having a wireless connection function and a vehicle-mounted device. Currently, the terminal device may be: a cellular phone (cellular phone), a smart phone (smart phone), a wireless data card, a personal digital assistant (personal digital assistant, PDA) computer, a mobile phone (mobile phone), a tablet computer, a notebook computer, a palmtop computer, a wireless modem (modem), a laptop computer (laptop computer), a mobile internet device (mobile internet device, MID), a wearable device, a virtual reality (virtual reality, VR) device, an augmented reality (augmented reality, AR) device, an extended reality (extended reality, XR) device, a mixed reality (mixed reality, MR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device may alternatively be a D2D terminal device, a V2X communication terminal device, an intelligent vehicle, a vehicle-mounted system (or referred to as an internet of vehicles system) (telematics box, TBOX), a machine-to-machine/machine-type communications (machine-to-machine/machine-type communications, M2M/MTC) terminal device, or an internet of things (internet of things, IoT) terminal device. For example, the terminal device may be a carrier such as a vehicle, a ship, or aircraft, a terminal-type roadside unit, or a communication module or chip built in the vehicle or roadside unit. For example, the terminal device may be a vehicle-mounted module. If the various terminal devices described above are in a vehicle, for example, placed in the vehicle or mounted in the vehicle, the terminal devices may all be considered as vehicle-mounted terminal devices. For example, the vehicle-mounted terminal devices are also referred to as on-board units (on-board units, OBUs).

By way of example but not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

Alternatively, the terminal device may be an intelligent device such as an amusement device or a smart appliance, or an uncrewed aerial vehicle.

It should be noted that a to-be-positioned terminal device (which may also be understood as a transmit-end terminal device) (for example, a first terminal device in subsequent embodiments) in this application may be any terminal device in the foregoing descriptions. A terminal device (which may also be understood as a receive-end terminal device) that measures a sidelink positioning reference signal (for example, a second terminal device or a third terminal device in subsequent embodiments) may be any terminal device in the foregoing descriptions, or may be a terminal device at a fixed location, and is mainly configured to communicate with the foregoing listed terminal device, to provide some common signal configuration information and assist information sharing between terminal devices. For example, the terminal device may be a roadside unit (roadside unit, RSU).

In this application, the terminal device may alternatively be a function module, a chip, or a chip system. Optionally, the function module, the chip, or the chip system may be disposed in the terminal device.

(6) The network device is a device that provides access for the terminal apparatus. The network device may include a radio access network (radio access network, RAN) device, for example, a base station. The network device may alternatively be a device that communicates with the terminal device through an air interface. The network device may include an evolved NodeB (evolved NodeB, which may be briefly referred to as an eNB or an e-NodeB) in an LTE system or a long term evolution-advanced (long term evolution-advanced, LTE-A) system. The eNB is an apparatus that is deployed in a radio access network and that meets a fourth generation (fourth generation, 4G) mobile communication technology standard and that provides a wireless communication function for the terminal device. The network device may alternatively be a new radio controller (new radio controller, NR controller), may be a (gNodeB, gNB) in a 5G system, may be a central network element (central unit), may be a new radio base station, may be a remote radio unit, may be a micro base station (also referred to as a small cell), may be a relay (relay), may be a distributed network element (distributed unit), may be macro base stations in various forms, or may be a transmission reception point (transmission reception point, TRP), a transmission measurement function (transmission measurement function, TMF), a transmission point (transmission point, TP), or any other radio access device. Embodiments of this application are not limited thereto. The network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a radio remote unit (remote radio unit, RRU), a wireless fidelity (wireless fidelity, Wi-Fi) access point (access point, AP), a baseband pool (BBU pool) and an RRU in a cloud radio access network (cloud radio access network, CRAN), or the like. A specific technology and a specific device form used by the network device are not limited in embodiments of this application. For example, the network device may correspond to the eNB in a 4G system, and correspond to the gNB in the 5G system.

In addition, the base station in embodiments of this application may include a central unit (central unit, CU) and a distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that such protocol layer division is merely an example, and division may alternatively be performed at another protocol layer. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be separated into different entities for implementation, where the entities are respectively a control-plane CU entity (CU-CP entity) and a user-plane CU entity (CU-UP entity). In this network architecture, signaling generated by the CU may be sent to the terminal device via the DU, or signaling generated by the UE may be sent to the CU via the DU. The DU may transparently transmit the signaling to the terminal device or the CU by directly encapsulating the signaling at a protocol layer without parsing the signaling. In the network architecture, the CU is divided as a network device on a RAN side. In addition, the CU may also be divided as a network device on a core network (core network, CN) side. This is not limited in this application.

In this application, the network device may alternatively be a central processing element (central processing element, CPE), a router, or the like.

In this application, the network device may alternatively be a function module, a chip, or a chip system. Optionally, the function module, the chip, or the chip system may be disposed in the network device.

(7) In the descriptions of this application, terms such as "first" and "second" are only for distinction and description, but cannot be understood as indicating or implying relative importance, or as indicating or implying a sequence.

(8) In the descriptions of this application, "at least one (type)" means one or more (types), and "a plurality of (types)" means two or more (types). The term "at least one of the following" or an expression similar to the term indicates any combination of the items, including any combination of a single item or a plurality of items. For example, at least one of a, b, or c may indicate a, b, c, a and b, a and c, b and c, or a, b, and c, where a, b, and c may be singular or plural.

(9) In the descriptions of this application, the term "and/or" describes an association relationship between associated objects, and indicates that three relationships may exist. For example, A and/or B may indicate the following cases: Only A exists, both A and B exist, and only B exists, where A and B may be singular or plural. "/" indicates "or". For example, a/b indicates a or b.

To describe the technical solutions in embodiments of this application more clearly, the following describes a communication method and an apparatus provided in embodiments of this application in detail with reference to the accompanying drawings.

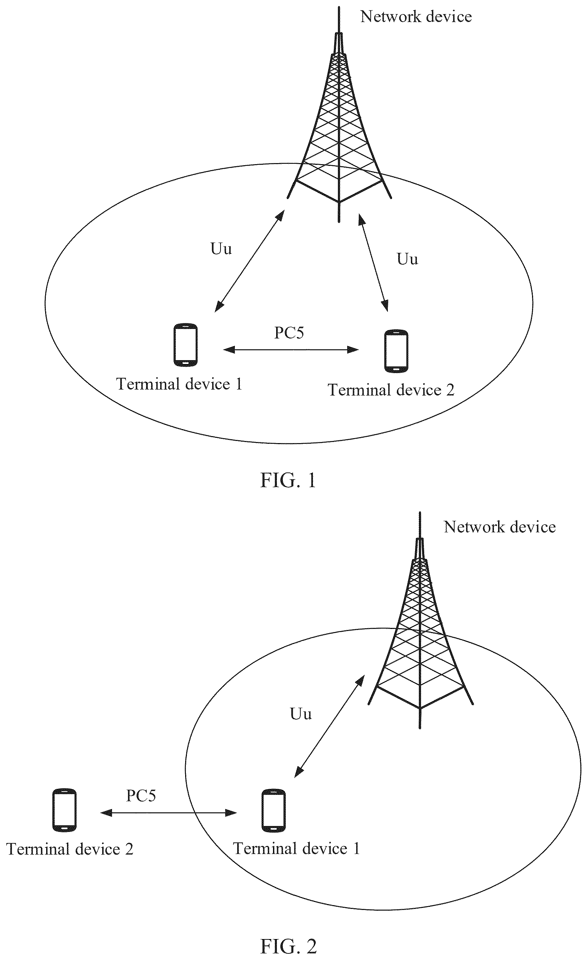

This application may be applied to a sidelink communication scenario. In this application, the terminal device may be located in coverage of the network device, or may be located outside the coverage of the network device. The terminal device in the coverage may perform direct communication (also referred to as sidelink communication) with the terminal device outside the coverage. For example, FIG. 1 to FIG. 3 show architectures of a plurality of communication systems to which the communication method provided in embodiments of this application is applicable.

FIG. 1 shows an architecture of a communication system in which a terminal device is located in coverage of a network device (in-coverage). The communication system includes cellular communication and terminal device direct communication. The communication system shown in FIG. 1 may include at least one network device and at least two terminal devices. FIG. 1 merely shows one network device and two terminal devices (a terminal device 1 and a terminal device 2 shown in FIG. 1). Both the terminal device 1 and the terminal device 2 are in the coverage of the network device. Both the terminal device 1 and the terminal device 2 can communicate with the network device through a Uu interface. For example, the network device may send information to the terminal device 1 through a downlink, and the terminal device 1 may send information to the network device through an uplink. Communication between the network device and the terminal device 2 is similar. The terminal device 1 and the terminal device 2 may perform direct communication, that is, perform PC5 communication, through a sidelink.

FIG. 2 shows an architecture of a communication system in which a part of terminal devices is located in coverage of a network device (partial coverage). The communication system includes cellular communication and terminal device direct communication. The communication system shown in FIG. 2 may include at least one network device and at least two terminal devices. A part of the terminal devices is located in the coverage of the network device, and the other part of the terminal devices is located outside the coverage of the network device. FIG. 2 merely shows one network device and two terminal devices (a terminal device 1 and a terminal device 2 shown in FIG. 2). The terminal device 1 is in the coverage of the network device, and the terminal device 2 is outside the coverage of the network device. The terminal device 1 may communicate with the network device through a Uu interface. For example, the network device may send information to the terminal device 1 through a downlink, and the terminal device 1 may send information to the network device through an uplink. The terminal device 1 and the terminal device 2 may perform direct communication, that is, perform PC5 communication, through a sidelink.

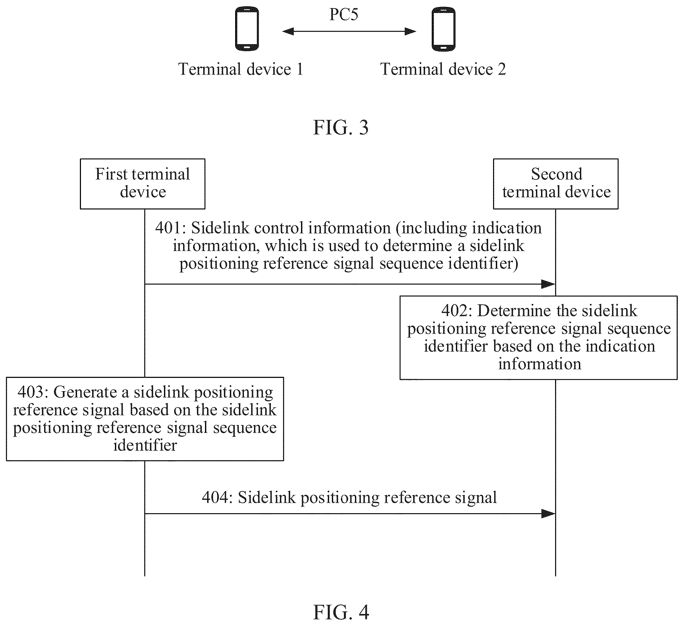

FIG. 3 shows an architecture of a communication system in which a terminal device is located outside coverage of a network device (out-of-coverage). The communication system includes terminal device direct communication. The communication system shown in FIG. 3 may include at least two terminal devices, and all the terminal devices are located outside the coverage of the network device. FIG. 3 merely shows two terminal devices (a terminal device 1 and a terminal device 2 shown in FIG. 3). The terminal device 1 and the terminal device 2 may perform direct communication, that is, perform PC5 communication, through a sidelink.

It should be noted that the foregoing communication systems are merely examples for description, and are not intended to limit the communication system in this application.

In a current sidelink communication scenario, a basic condition of sidelink positioning is that a to-be-positioned terminal device needs to send a sidelink positioning reference signal, where a sidelink positioning reference signal sequence identifier is required for generating the sidelink reference signal and receiving a corresponding sidelink positioning reference signal by a receive-end terminal device. However, the current sidelink positioning reference signal sequence identifier is unitary. For example, the current sidelink positioning reference signal sequence identifier can meet only a privacy requirement, or can meet only a non-privacy requirement. Based on this, embodiments of this application provide a sidelink communication method, to flexibly configure a sidelink positioning reference signal sequence identifier, so as to meet positioning demands of different privacy requirements.

In embodiments of this application, an operation performed by an XX device may also be performed by a processor, a chip, a function module, or the like in the XX device. This is not limited in this application. For example, the following operation performed by a first terminal device may also be performed by a processor, a chip, a function module, or the like in the first terminal device. The same applies to a device such as a second terminal device. Details are not described one by one.

Based on the foregoing descriptions, an embodiment of this application provides a sidelink communication method. Refer to FIG. 4. A procedure of the method may include the following steps.

Step 401: A first terminal device sends sidelink control information (sidelink control information, SCI) to a second terminal device, where the SCI includes indication information, the indication information is used to determine a sidelink positioning reference signal sequence identifier, the sidelink positioning reference signal sequence identifier is a first-type identifier or a second-type identifier, and configuration manners of the first-type identifier and the second-type identifier are different. Correspondingly, the second terminal device receives the SCI from the first terminal device.

The first terminal device may be understood as a to-be-positioned terminal device, or may be referred to as a transmit-end terminal device. The second terminal device may be understood as a terminal device that performs positioning measurement, or may be referred to as a receive-end terminal device. It should be noted that this application is described by using only an example in which the receive-end terminal device is the second terminal device. Optionally, there may be one or more receive-end terminal devices. For example, a plurality of terminal devices such as the second terminal device and a third terminal device are included. Details are not described in this application.

For example, the SCI may be first-order SCI.

SCI defined in a current standard is used for two steps: The first-order SCI carries information about a resource occupied by a sidelink communication link, has a reserved bit that is not used, and is broadcast to all terminal devices; and second-order SCI carries information such as identifiers of both the transmit-end terminal device and the receive-end terminal device, for example, a source user ID (herein, for example, a first terminal device ID) and a target user ID (herein, for example, a second terminal device ID).

Based on this, optionally, the reserved bit of the first-order SCI may carry the indication information.

It should be noted that in this application, only an example in which the indication information is carried in the sidelink control information is used for description. Optionally, the indication information may be carried in other information, or the first terminal device may directly send the indication information to the second terminal device. This is not limited in this application.

In an optional implementation, the first-type identifier may be a private identifier, and the second-type identifier may be a non-private identifier. Alternatively, the first-type identifier may be an encrypted identifier, and the second-type identifier may be an unencrypted identifier. Alternatively, the first-type identifier is an identifier configured at an application layer, and the second-type identifier may be an identifier configured at a bottom layer. Certainly, the first-type identifier and the second-type identifier may alternatively be other types of identifiers, which are not listed one by one in this application.

In some scenarios, the first terminal device may need positioning of different privacy requirements. In this way, under different privacy requirements, the first terminal device may need the private identifier (that is, the first-type identifier), or may need the non-private identifier (that is, the second-type identifier). For example, a scenario in which services, with different privacy requirements, of vehicle-mounted social media network positioning and V2X road cooperative positioning coexist is applied to the first terminal device. The vehicle-mounted social media network positioning service may have a high positioning privacy requirement. The first terminal device does not expect that location information of the first terminal device be exposed, and the privacy requirement is high. For the V2X road cooperative positioning service, the first terminal device (for example, a to-be-positioned vehicle) expects that more terminal devices can receive SL-PRS information of the first terminal device and sense a location of the first terminal device, to improve road safety and traffic efficiency. In this case, the positioning service of the first terminal device not only has no privacy requirement, but also requires that an SL-PRS of the first terminal device be broadcast and cannot be encrypted.

In an optional manner a1, the indication information may include a first bit, in other words, the sidelink positioning reference signal sequence identifier is determined by using one bit. Specifically, the first bit may indicate whether a configuration manner of the sidelink positioning reference signal sequence identifier is a first configuration manner or a second configuration manner. The first configuration manner is used to determine that the sidelink positioning reference signal sequence identifier is the first-type identifier, and the second configuration manner is used to determine that the sidelink positioning reference signal sequence identifier is the second-type identifier.

The first configuration manner may also be referred to as a privacy configuration manner, and the second configuration manner may also be referred to as a non-privacy configuration manner. Alternatively, the first configuration manner may also be referred to as an encryption configuration manner, and the second configuration manner may also be referred to as a non-encryption configuration manner. Alternatively, the first configuration manner may also be referred to as an application layer configuration manner, and the second configuration manner may also be referred to as a bottom layer configuration manner. Certainly, the first configuration manner and the second configuration manner may also be referred to as other configuration manners, which are not listed one by one in this application.

In an example, the first configuration manner may be a manner of configuring a sidelink positioning reference signal sequence identifier based on a sidelink positioning protocol (sidelink positioning protocol, SLPP), and may be referred to as an SLPP-based configuration manner for short.

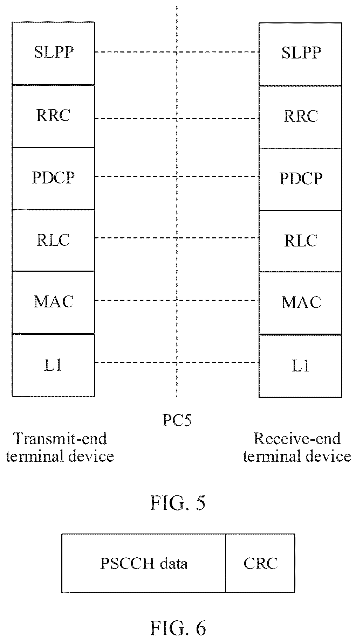

It can be learned from a diagram of an SLPP protocol stack shown in FIG. 5 that, an SLPP protocol layer is above an RRC protocol layer, and is an upper-layer protocol. Therefore, content carried in the SLPP protocol is encrypted information, is known only to the transmit-end terminal device and the receive-end terminal device, and has good privacy protection. Therefore, configuring the sidelink positioning reference signal sequence identifier between the transmit-end terminal device and the receive-end terminal device based on the SLPP protocol can implement privacy protection. To be specific, the transmit-end terminal device sends, by using the SLPP, the configured sidelink positioning reference signal sequence identifier to the receive-end terminal device expected by the transmit-end terminal device, so that a configured sidelink positioning reference signal sent by the transmit-end terminal device can be received only by the terminal device expected by the transmit-end terminal device.

It should be understood that before the first bit included in the indication information indicates the configuration manner of the sidelink positioning reference signal sequence identifier, the sidelink positioning reference signal sequence identifier has been configured between the first terminal device and the second terminal device based on the SLPP. When the first bit indicates that the configuration manner of the sidelink positioning reference signal sequence identifier is the privacy configuration manner, the second terminal device may determine a configured private identifier.

In an example, the second configuration manner may be a manner of configuring a sidelink positioning reference signal sequence identifier based on a non-SLPP, and may be referred to as a non-SLPP-based configuration manner for short. Optionally, the second configuration manner may be at least one of the following configuration manners: a manner of preconfiguring a sidelink positioning reference signal sequence identifier for a resource pool, a manner of configuring a sidelink positioning reference signal sequence identifier based on a physical sidelink control channel (physical sidelink shared channel, PSCCH) cyclic redundancy check (cyclic redundancy check, CRC), a manner of configuring a sidelink positioning reference signal sequence identifier based on a transmit-end identifier of the sidelink control information, or a manner of configuring a sidelink positioning reference signal sequence identifier based on a receive-end identifier of the sidelink control information.

It should be understood that although the second configuration manner may include the foregoing plurality of manners, when the indication information indicates the second configuration manner, the second configuration manner is one of the foregoing plurality of manners.

Optionally, in the manner of configuring the sidelink positioning reference signal sequence identifier based on the PSCCH CRC (which may be referred to as a PSCCH CRC-based configuration manner for short), specifically, a CRC of PSCCH data may be used as the sidelink positioning reference signal sequence identifier, and is usually 12 bits. FIG. 6 shows a structure of a PSCCH and the PSCCH CRC. The CRC is a check code generated based on the PSCCH data, and is used to detect or check an error that may occur in a transmission process of the PSCCH data.

In sidelink transmission, the second-order SCI indicates the sidelink control information. The first-order SCI is carried on the PSCCH, and is broadcast to all the terminal devices. Therefore, on a time-frequency resource sent through the PSCCH, all the terminal devices can perform receiving, to obtain a sidelink positioning reference signal sequence identifier of a corresponding terminal device, so as to receive a sidelink positioning reference signal of the terminal device. Therefore, the sidelink positioning reference signal sequence identifier configured in the manner of configuring the sidelink positioning reference signal sequence identifier based on the PSCCH CRC is non-private.

Currently, the SCI includes the transmit-end identifier (that is, a source ID) and the receive-end identifier (that is, a destination ID). The transmit-end identifier is 8 bits and indicates a transmit end (that is, the first terminal device in this embodiment of this application) of a current sidelink, and the receive-end identifier is 16 bits and indicates a receive end (that is, the second terminal device in this embodiment of this application) of the current sidelink.

Based on this, optionally, in the manner of configuring the sidelink positioning reference signal sequence identifier based on the transmit-end identifier of the sidelink control information (which may be referred to as an SCI source ID-based configuration manner for short), for example, the sidelink positioning reference signal sequence identifier may be represented by using the 8-bit transmit-end identifier and 4-bit 0 information (that is, 12 bits of information in total). In the manner of configuring the sidelink positioning reference signal sequence identifier based on the receive-end identifier of the sidelink control information (which may be referred to as an SCI destination ID-based configuration manner for short), for example, the sidelink positioning reference signal sequence identifier may be represented by using 12 least significant bits of information of the transmit-end identifier.

Because the SCI is not encrypted, all the terminal devices can monitor the SCI to obtain the sidelink positioning reference signal sequence identifier, so as to correctly receive the sidelink positioning reference signal, and obtain a location measurement result of the transmit-end terminal device. Therefore, the manner of configuring the sidelink positioning reference signal sequence identifier based on the transmit-end identifier of the sidelink control information and the manner of configuring the sidelink positioning reference signal sequence identifier based on the receive-end identifier of the sidelink control information are also non-privacy configuration manners.

In the manner of preconfiguring the sidelink positioning reference signal sequence identifier for the resource pool (which may be referred to as a resource pool configuration manner for short), to be specific, the sidelink positioning reference signal sequence identifier is configured in the resource pool, all terminal devices in the resource pool can obtain the sidelink positioning reference signal sequence identifier. Therefore, the manner of preconfiguring the sidelink positioning reference signal sequence identifier for the resource pool is the non-privacy configuration manner. The sidelink positioning reference signal sequence identifier preconfigured for the resource pool may be delivered to the terminal device together with configuration information of the resource pool.

For example, when a value of the first bit is a first value, the indication information indicates that the configuration manner of the sidelink positioning reference signal sequence identifier is the first configuration manner, for example, the SLPP-based configuration manner. Therefore, it may be determined that the configuration manner of the sidelink positioning reference signal sequence identifier is the first-type identifier. Alternatively, when a value of the first bit is a second value, the indication information indicates that the configuration manner of the sidelink positioning reference signal sequence identifier is the second configuration manner, for example, one of the resource pool configuration manner, the PSCCH CRC-based configuration manner, the SCI source ID-based configuration manner, or the SCI destination ID based configuration manner. Therefore, it may be determined that the configuration manner of the sidelink positioning reference signal sequence identifier is the second-type identifier.

For example, the first value may be 0, and the second value may be 1. In other words, when the first bit is 0, it indicates that the configuration manner of the sidelink positioning reference signal sequence identifier is the privacy configuration manner; or when the first bit is 1, it indicates that the configuration manner of the sidelink positioning reference signal sequence identifier is the non-privacy configuration manner.

For another example, the first value may be 1, and the second value may be 0. In other words, when the first bit is 1, it indicates that the configuration manner of the sidelink positioning reference signal sequence identifier is the privacy configuration manner; or when the first bit is 0, it indicates that the configuration manner of the sidelink positioning reference signal sequence identifier is the non-privacy configuration manner.

In an optional manner a2, the indication information may include a plurality of bits, and different values of the plurality of bits indicate different sidelink positioning reference signal sequence identifiers. A sidelink positioning reference signal sequence identifier corresponding to any one of the different values is one of the following: a sidelink positioning reference signal sequence identifier that is configured as the first-type identifier based on the first configuration manner, or a sidelink positioning reference signal sequence identifier that is configured as the second-type identifier based on the second configuration manner.

Specifically, for specific descriptions of the first configuration manner and the second configuration manner, refer to related descriptions in the manner a1. Details are not described herein again.

In the manner 2, the first terminal device and the second terminal device maintain a plurality of sidelink positioning reference signal sequence identifiers configured based on the first configuration manner and the second configuration manner. For example, an example in which an identifier candidate list is maintained is used for description, but this is not intended to limit this application. In other words, the plurality of sidelink positioning reference signal sequence identifiers may exist in another form. The identifier candidate list includes both the sidelink positioning reference signal sequence identifier configured based on the first configuration manner and the sidelink positioning reference signal sequence identifier configured based on the second configuration manner. The sidelink positioning reference signal sequence identifier that is based on the second configuration manner and that is included in the candidate list may include a sidelink positioning reference signal sequence identifier configured in at least one of the following configuration manners described above: the manner of preconfiguring the sidelink positioning reference signal sequence identifier for the resource pool, the manner of configuring the sidelink positioning reference signal sequence identifier based on the PSCCH CRC, the manner of configuring the sidelink positioning reference signal sequence identifier based on the transmit-end identifier of the sidelink control information, or the manner of configuring the sidelink positioning reference signal sequence identifier based on the receive-end identifier of the sidelink control information. It should be understood that, although the second configuration manner may include the foregoing plurality of configuration manners, when the plurality of bits in the indication information use a specific value to indicate the sidelink positioning reference signal sequence identifier that is configured as the second-type identifier based on the second configuration manner, this manner is one of the foregoing plurality of configuration manners.

Optionally, one or more sidelink positioning reference signal sequence identifiers may be configured in any configuration manner. For example, the sidelink positioning reference signal sequence identifier configured based on the SLPP may be N1. The sidelink positioning reference signal sequence identifiers preconfigured for the resource pool may be N2, N3, N4, and N5. The sidelink positioning reference signal sequence identifier configured based on the PSCCH CRC may be N6. The sidelink positioning reference signal sequence identifier configured based on the SCI source ID may be N7. The sidelink positioning reference signal sequence identifier configured based on the SCI destination ID may be N8. That is, the identifier candidate list includes N1, and further includes one or more of N2 to N8.

It should be understood that quantities and names of sidelink positioning reference signal sequence identifiers configured in different manners in the foregoing examples are merely examples for description, and are not intended to limit this application.

In an example b1, the indication information may include three bits. Eight different values corresponding to the three bits may respectively indicate eight different sidelink positioning reference signal sequence identifiers. For example, a correspondence between the bit values and the sidelink positioning reference signal sequence identifiers may be shown in Table 1.

Table 1

| Configuration manner | Sidelink positioning reference signal sequence identifier | Bit value |
|---|---|---|
| Privacy configuration (SLPP-based configuration) | N1 | 000 |
| Non-privacy configuration (resource pool preconfiguration manner) | N2 | 001 |
| | N3 | 010 |
| | N4 | 011 |
| | N5 | 100 |
| Non-privacy configuration (PSCCH CRC-based configuration) | N6 | 101 |
| Non-privacy configuration (SCI source ID based configuration) | N7 | 110 |
| Non-privacy configuration (SCI destination ID-based configuration) | N8 | 111 |

It should be understood that the correspondence between the bit values of the three bits and the sidelink positioning reference signal sequence identifiers in Table 1 is merely an example, and is not intended to limit this application, provided that the three bits can uniquely and clearly indicate the sidelink positioning reference signal sequence identifiers. In other words, in Table 1, the bit values may be in one-to-one correspondence with the sidelink positioning reference signal sequence identifiers in any order. For example, 000 corresponds to N2 or any other identifier. Other bit values are similar, and details are not described herein.

In an example b2, the indication information may include two bits. Four different values corresponding to the two bits may respectively indicate four different sidelink positioning reference signal sequence identifiers. For example, a correspondence between the bit values and the sidelink positioning reference signal sequence identifiers may be shown in Table 2.

Table 2

| Configuration manner | Sidelink positioning reference signal sequence identifier | Bit value |
|---|---|---|
| Privacy configuration (SLPP-based configuration) | N1 | 00 |
| Non-privacy configuration (resource pool preconfiguration manner) | N2 | 01 |
| | N3 | 10 |
| Non-privacy configuration (PSCCH CRC-based configuration) | N6 | 11 |

It should be understood that the correspondence between the bit values of the two bits and the sidelink positioning reference signal sequence identifiers in Table 2 is merely an example, and is not intended to limit this application, provided that the two bits can uniquely and clearly indicate the sidelink positioning reference signal sequence identifiers. In other words, in Table 2, the bit values may be in one-to-one correspondence with the sidelink positioning reference signal sequence identifiers in any order. For example, 00 corresponds to N2 or any other identifier. Other bit values are similar, and details are not described herein.

It should be noted that, in the example b2, only an example in which the identifier candidate list includes the sidelink positioning reference signal sequence identifier preconfigured for the resource pool and the sidelink positioning reference signal sequence identifier configured based on the PSCCH CRC is used for illustration, and this is not intended to limit this application. Optionally, when the indication information includes two bits, the identifier candidate list may include the sidelink positioning reference signal sequence identifier configured in any one or more configuration manners: the resource pool preconfiguration manner, the PSCCH CRC-based configuration manner, the SCI source ID-based configuration manner, or the SCI destination ID-based configuration manner, and may include at most the sidelink positioning reference signal sequence identifiers configured in any three of the configuration manners.

In an optional implementation, the SCI may further include measurement request information (measurement request), and the measurement request information is used to request the second terminal device to receive and measure the sidelink positioning reference signal.

Optionally, the measurement request information may be carried in the reserved bit of the first-order SCI.

For example, the measurement request information may also be described as a positioning request indication or the like.

In another optional implementation, the measurement request information may not be carried in the SCI. In other words, the first terminal device may send the measurement request information to the second terminal device by using other information. In this case, the measurement request information and the SCI may be carried in a same message, or may be separately carried in different messages for separate sending.

Optionally, before the first terminal device sends the SCI to the second terminal device (that is, before step 401), both the first terminal device and the second terminal device need to configure an SL-PRS resource. Based on the foregoing descriptions, sidelink resource selection modes are different. In different modes, methods for configuring the SL-PRS resource by the first terminal device and the second terminal device are different, and may be the following method c1 and method c2.

In the method c1, the sidelink resource selection mode is a mode 2, to be specific, the terminal device autonomously senses a resource and sends a sidelink signal.

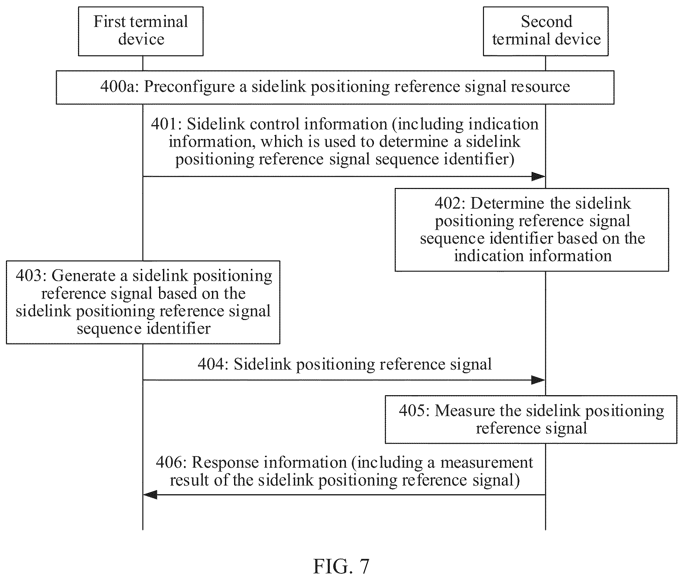

In the method c1, a sidelink positioning reference signal resource of the first terminal device and the second terminal device is preconfigured. For example, in step 400a in FIG. 7, the sidelink positioning reference signal resource is preconfigured. That the sidelink positioning reference signal resource is preconfigured means that a resource pattern (pattern) of the sidelink positioning reference signal resource, a subcarrier spacing of the sidelink positioning reference signal, a frequency domain occupied bandwidth, and the like are preconfigured for the first terminal device and the second terminal device. Optionally, the resource pattern of the sidelink positioning reference signal resource may include a time domain symbol quantity, frequency domain resource density, and the like of the sidelink positioning reference signal resource.

Optionally, the foregoing preconfigured information may be considered as being preconfigured when the first terminal device and the second terminal device are in network coverage. In other words, step 400a may be: A network device separately preconfigures the information for the first terminal device and the second terminal device when the first terminal device and the second terminal device are in coverage of the network device.

In the method c2, the sidelink resource selection mode is a mode 1, to be specific, the terminal device performs sidelink positioning measurement in network coverage.

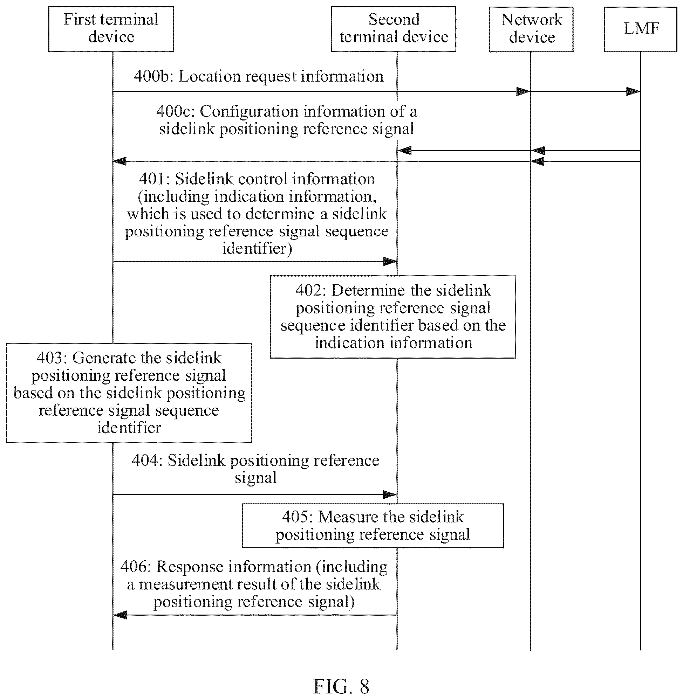

In the method c2, when the first terminal device has a location positioning demand, the first terminal device initiates a location request to a network side (location management function/positioning server (location management function, LMF)) in real time, so that the network side can configure a related configuration of the sidelink positioning reference signal in real time. For example, as shown in FIG. 8, the foregoing process may include the following steps.

Step 400b: When the first terminal device has the location positioning demand, the first terminal device sends location request information to the LMF, where the location request information is used to request configuration information of the sidelink positioning reference signal.

The first terminal device sends the location request information to the LMF via a network device. In other words, the first terminal device sends the location request information to the network device, and the network device forwards the location request information to the LMF.

Step 400c: The LMF sends the configuration information of the sidelink positioning reference signal to the first terminal device and the second terminal device.

The configuration information of the sidelink positioning reference signal may include a resource pattern (pattern) of a sidelink positioning reference signal resource, a subcarrier spacing of the sidelink positioning reference signal, a frequency domain occupied bandwidth, and the like. Optionally, the resource pattern of the sidelink positioning reference signal resource may include a time domain symbol quantity, frequency domain resource density, and the like of the sidelink positioning reference signal resource.

The LMF sends the configuration information of the sidelink positioning reference signal to the first terminal device and the second terminal device via the network device. In other words, the LMF sends the configuration information of the sidelink positioning reference signal to the network device, and the network device forwards the configuration information of the sidelink positioning reference signal to the first terminal device and the second terminal device.

Then, the first terminal device may perform step 401.

Step 402: The second terminal device determines the sidelink positioning reference signal sequence identifier based on the indication information.

Specifically, with reference to the descriptions in step 401, the second terminal device may determine the private identifier or the non-private identifier based on the indication information. For details, refer to the foregoing descriptions. Details are not described herein again.

Step 403: The first terminal device generates the sidelink positioning reference signal based on the sidelink positioning reference signal sequence identifier.

In an optional implementation, the first terminal device may generate the sidelink positioning reference signal based on the sidelink positioning reference signal sequence identifier by using the following Formula 1 and Formula 2:

$$r(m) = \frac{1}{\sqrt{2}}\big(1 - 2c(2m)\big) + j\frac{1}{\sqrt{2}}\big(1 - 2c(2m+1)\big) \qquad \text{Formula 1}$$

$$c_{init} = \left(2^{22}\left\lfloor\frac{n_{ID,seq}^{PRS}}{1024}\right\rfloor + 2^{10}\big(N_{symb}^{slot}n_{s,f}^{\mu} + l + 1\big)\big(2\big(n_{ID,seq}^{PRS} \bmod 1024\big) + 1\big) + \big(n_{ID,seq}^{PRS} \bmod 1024\big)\right) \bmod 2^{31}$$

$$\text{Formula 2}$$

r(m) is the sidelink positioning reference signal, and *m* is an element index of a sidelink positioning reference signal sequence. For example, a length of the sidelink positioning reference signal is 101, that is, 101 complex numbers are included, and m is indexes of the 101 complex numbers, that is, 1 to 101. $c_{init}$ is an initial sequence when a 31-order Gold sequence is used in a pseudo-random sequence c(i), i is an element index of the Gold sequence, $n_{s,f}^{\mu}$ is a slot number, $N_{symb}^{slot}$ is a quantity of symbols in a single slot, l is a symbol location to which a sidelink positioning reference signal is mapped in a single slot, $n_{ID,seq}^{PRS}$ is the sidelink positioning reference signal sequence identifier, and mod is a modulo operation (or referred to as a reminder operation).

It should be understood that a sequence of step 402 and step 403 is not limited, and only an example is used for description herein.

Step 404: The first terminal device sends the sidelink positioning reference signal to the second terminal device. Correspondingly, the second terminal device receives the sidelink positioning reference signal from the first terminal device.

Specifically, the second terminal device receives the sidelink positioning reference signal from the first terminal device based on the sidelink positioning reference signal sequence identifier.

Optionally, when the sidelink positioning reference signal sequence identifier is an identifier of the privacy configuration, only a terminal device (for example, the second terminal device herein) that has exchanged the sidelink positioning reference signal sequence identifier with the first terminal device by using the SLPP can receive the sidelink positioning reference signal of the first terminal device, to implement privacy protection. When the sidelink positioning reference signal sequence identifier is an identifier of the non-privacy configuration, all terminal devices (including the second terminal device) in the resource pool can receive the sidelink positioning reference signal of the first terminal device.

In an optional implementation, after step 404, as shown in FIG. 7 or FIG. 8, the second terminal device may further perform the following step 405 and step 406.

Step 405: The second terminal device measures the sidelink positioning reference signal.

Step 406: The second terminal device sends response information to the first terminal device, where the response information includes a measurement result of the sidelink positioning reference signal. Correspondingly, the first terminal device receives the response information from the second terminal device.

Optionally, the second terminal device may perform comparison measurement on the received sidelink reference signal and the sidelink reference signal that is determined based on the sidelink reference signal sequence identifier, to obtain the measurement result of the sidelink positioning reference signal.

For example, the measurement result may be one or more of the following: relative time of arrival (relative time of arrival, RTOA), time of arrival (time of arrival, TOA), an angle of arrival (angle of arrival, AOA), reference signal received power (reference signal received power, RSRP), reference signal received path power (reference signal received path power, RSRPP), time of path arrival (time of path arrival), an angle of path arrival (angle of path arrival), a reference signal Doppler component (reference signal Doppler component), a reference signal path Doppler component (reference signal path Doppler component), and a terminal device velocity (UE velocity) from the first terminal device to the second terminal device.

It should be noted that the RTOA in this application is time of a start point of a subframe in which a receive end receives a reference signal relative to RTOA reference time. The TOA is start time of the subframe in which the receive end receives the reference signal. The AOA refers to an azimuth angle and a vertical angle of the reference signal relative to a reference direction. The RSRP is an average value of received signal power on a resource element carrying the reference signal within measurement time and a measurement bandwidth that are configured for the reference signal. The RSRPP is an average value of received power of the resource element carrying the reference signal on a delay path of a transmission channel within the measurement time and the measurement bandwidth that are configured for the reference signal, where RSRPP of a first delay path is an average value of received power corresponding to a $1^{st}$ detected (that is, first detected) transmission path. The time of path arrival is time at which the receive end receives a receive component corresponding to the reference signal on a path of the transmission channel. The time may be time relative to the start point of the subframe in which the reference signal is located, time relative to the TOA, or time relative to time of arrival of a path. The angle of path arrival is an azimuth angle and a vertical angle of the reference signal on a transmission path relative to the reference direction. The reference signal Doppler component is a difference between arrival phases of the reference signal obtained by the receive end through two consecutive measurements when the time of arrival and the angle of arrival of the reference signal are given. The reference signal path Doppler component is a difference between arrival phases of the reference signal obtained by the receive end through two consecutive measurements on the transmission path when the time of arrival and the angle of arrival of the reference signal on the transmission path are given. The terminal device velocity is a velocity of a target device (the first terminal device in this application) measured by the receive end based on the reference signal, and includes direction and value information.

Based on the foregoing communication method, whether the current sidelink positioning reference signal sequence identifier is the first-type identifier or the second-type identifier may be determined by including the indication information in the SCI, so that the sidelink positioning reference signal sequence identifier can be flexibly configured, to meet positioning demands of different privacy requirements.

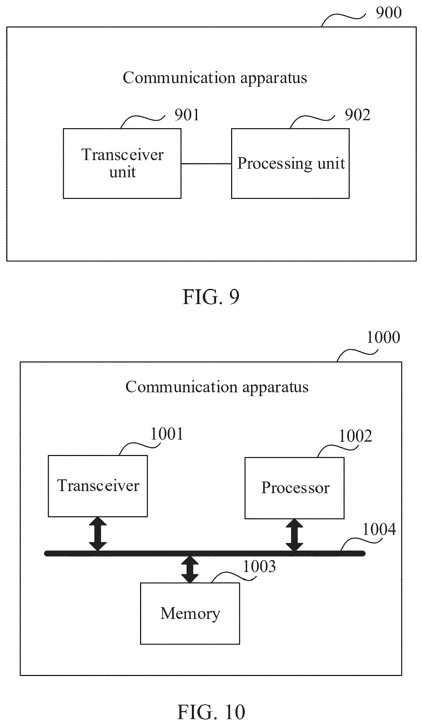

Based on the foregoing embodiments, an embodiment of this application further provides a communication apparatus. Refer to FIG. 9. The communication apparatus 900 may include a transceiver unit 901 and a processing unit 902. The transceiver unit 901 is used by the communication apparatus 900 to receive a signal (information, data, or the like) or send a signal (information, data, or the like), and the processing unit 902 is configured to control and manage an action of the communication apparatus 900. The processing unit 902 may further control a step performed by the transceiver unit 901.

Optionally, the transceiver unit 901 may include a receiving unit and/or a sending unit. The receiving unit may be used by the communication apparatus 900 to receive a signal (information, data, or the like), and the sending unit may be used by the communication apparatus 900 to send a signal (information, data, or the like). The sending unit may send a signal (information, data, or the like) under control of the processing unit 902, and the receiving unit may receive a signal (information, data, or the like) under control of the processing unit 902.

For example, the communication apparatus 900 may be specifically the first terminal device in the foregoing embodiments, or a processor, a chip, a chip system, a function module, or the like in the first terminal device; or the communication apparatus 900 may be specifically the second terminal device in the foregoing embodiments, or a processor, a chip, a chip system, a function module, or the like in the second terminal device.

In an embodiment, the communication apparatus 900 is configured to implement functions of the first terminal device in the embodiment shown in FIG. 4, FIG. 7, or FIG. 8.

The transceiver unit 901 may be configured to send sidelink control information to a second terminal device, where the sidelink control information includes indication information, the indication information is used to determine a sidelink positioning reference signal sequence identifier, the sidelink positioning reference signal sequence identifier is a first-type identifier or a second-type identifier, and configuration manners of the first-type identifier and the second-type identifier are different. The processing unit 902 may be configured to generate a sidelink positioning reference signal based on the sidelink positioning reference signal sequence identifier. The transceiver unit 901 may be further configured to send the sidelink positioning reference signal to the second terminal device.

In an optional implementation, the transceiver unit 901 may be further configured to receive response information from the second terminal device, where the response information includes a measurement result of the sidelink positioning reference signal.

In another embodiment, the communication apparatus 900 is configured to implement functions of the second terminal device in the embodiment shown in FIG. 4, FIG. 7, or FIG. 8.

The transceiver unit 901 may be configured to receive sidelink control information from a first terminal device, where the sidelink control information includes indication information, the indication information is used to determine a sidelink positioning reference signal sequence identifier, the sidelink positioning reference signal sequence identifier is a first-type identifier or a second-type identifier, and configuration manners of the first-type identifier and the second-type identifier are different. The processing unit 902 may be configured to determine the sidelink positioning reference signal sequence identifier based on the indication information. The transceiver unit 901 may be further configured to receive a sidelink positioning reference signal from the first terminal device based on the sidelink positioning reference signal sequence identifier.

In an optional implementation, the processing unit 902 may be further configured to measure the sidelink positioning reference signal. The transceiver unit 901 may be further configured to send response information to the first terminal device, where the response information includes a measurement result of the sidelink positioning reference signal.

With reference to the foregoing embodiment, the following examples are provided.

In an example, the indication information includes a first bit. That the indication information is used to determine the sidelink positioning reference signal sequence identifier includes: When a value of the first bit is a first value, the indication information indicates that a configuration manner of the sidelink positioning reference signal sequence identifier is a first configuration manner, and the first configuration manner is used to determine that the sidelink positioning reference signal sequence identifier is the first-type identifier; or when a value of the first bit is a second value, the indication information indicates that a configuration manner of the sidelink positioning reference signal sequence identifier is a second configuration manner, and the second configuration manner is used to determine that the sidelink positioning reference signal sequence identifier is the second-type identifier.

In another example, the indication information includes a plurality of bits, and different values of the plurality of bits indicate different sidelink positioning reference signal sequence identifiers. A sidelink positioning reference signal sequence identifier corresponding to any one of the different values is one of the following: a sidelink positioning reference signal sequence identifier that is configured as the first-type identifier based on the first configuration manner, or a sidelink positioning reference signal sequence identifier that is configured as the second-type identifier based on the second configuration manner.

Optionally, the first configuration manner is a manner of configuring a sidelink positioning reference signal sequence identifier based on a sidelink positioning protocol SLPP, and the second configuration manner is at least one of the following configuration manners: a manner of preconfiguring a sidelink positioning reference signal sequence identifier for a resource pool, a manner of configuring a sidelink positioning reference signal sequence identifier based on a physical sidelink control channel cyclic redundancy check, a manner of configuring a sidelink positioning reference signal sequence identifier based on a transmit-end identifier of the sidelink control information, or a manner of configuring a sidelink positioning reference signal sequence identifier based on a receive-end identifier of the sidelink control information.

In an optional implementation, the first-type identifier is a private identifier, and the second-type identifier is a non-private identifier.

For example, the sidelink control information further includes measurement request information, and the measurement request information is used to request the second terminal device to receive and measure the sidelink positioning reference signal.

It should be noted that, in embodiments of this application, division into the units is an example, and is merely logical function division. During actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. Refer to FIG. 10. The communication apparatus 1000 may include a transceiver 1001 and a processor 1002. Optionally, the communication apparatus 1000 may further include a memory 1003. The memory 1003 may be disposed inside the communication apparatus 1000, or may be disposed outside the communication apparatus 1000. The processor 1002 may control the transceiver 1001 to receive and send a signal, a message, information, data, or the like. The transceiver may be a transceiver or the like.

Optionally, the transceiver 1001 may include a transmitter and/or a receiver. The transmitter is configured to send a signal, a message, information, data, or the like. The receiver is configured to receive a signal, a message, information, data, or the like. For example, the transmitter sends a signal, a message, information, data, or the like under control of the processor 1002. The receiver receives a signal, a message, information, data, or the like under control of the processor 1002.

Specifically, the processor 1002 may be a central processing unit (central processing unit, CPU), a network processor (network processor, NP), or a combination of the CPU and the NP. The processor 1002 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), generic array logic (generic array logic, GAL), or any combination thereof.

The transceiver 1001, the processor 1002, and the memory 1003 are interconnected. Optionally, the transceiver 1001, the processor 1002, and the memory 1003 are interconnected through a bus 1004. The bus 1004 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 10, but this does not mean that there is only one bus or only one type of bus.

In an optional implementation, the memory 1003 is configured to store a program and the like. Specifically, the program may include program code, and the program code includes computer operation instructions. The memory 1003 may include a RAM, and may further include a non-volatile memory (non-volatile memory), for example, one or more disk memories. The processor 1002 executes the application program stored in the memory 1003, to implement the foregoing function, thereby implementing functions of the communication apparatus 1000.

For example, the communication apparatus 1000 may be specifically the first terminal device in the foregoing embodiment, or may be the second terminal device in the foregoing embodiment. Alternatively, the communication apparatus 1000 may be a chip or the like.

In an embodiment, when the communication apparatus 1000 implements functions of the first terminal device in the foregoing embodiment, the transceiver 1001 may implement receiving and sending operations performed by the first terminal device in the foregoing embodiment, and the processor 1002 may implement an operation other than the receiving and sending operations performed by the first terminal device in the foregoing embodiment. Specifically, for related specific descriptions, refer to related descriptions in the foregoing embodiments. Details are not described herein again.

In another embodiment, when the communication apparatus 1000 implements functions of the second terminal device in the foregoing embodiment, the transceiver 1001 may implement receiving and sending operations performed by the second terminal device in the foregoing embodiment, and the processor 1002 may implement an operation other than the receiving and sending operations performed by the second terminal device in the foregoing embodiment. Specifically, for related specific descriptions, refer to related descriptions in the foregoing embodiments. Details are not described herein again.

In another embodiment, when the communication apparatus 1000 is a chip, the communication apparatus 1000 includes a transceiver 1001 and a processor 1002, but does not include a memory. The transceiver 1001 exists as an input/output interface, and the input/output interface is used by a chip to implement receiving and sending of the communication apparatus 1000. The input/output interface may include an input interface and/or an output interface. The input interface may implement receiving of the communication apparatus 1000, and the output interface may be configured to implement sending of the communication apparatus 1000.

Optionally, when the communication apparatus 1000 is a chip, when the chip implements functions of the first terminal device in the foregoing embodiment, the input/output interface may implement receiving and sending operations performed by the first terminal device in the foregoing embodiment, and the processor 1002 may implement an operation other than the receiving and sending operations performed by the first terminal device in the foregoing embodiment. Specifically, for related specific descriptions, refer to related descriptions in the foregoing embodiments. Details are not described herein again.

Optionally, when the communication apparatus 1000 is a chip, when the chip implements functions of the second terminal device in the foregoing embodiment, the input/output interface may implement receiving and sending operations performed by the second terminal device in the foregoing embodiment, and the processor 1002 may implement an operation other than the receiving and sending operations performed by the second terminal device in the foregoing embodiment. Specifically, for related specific descriptions, refer to related descriptions in the foregoing embodiments. Details are not described herein again.

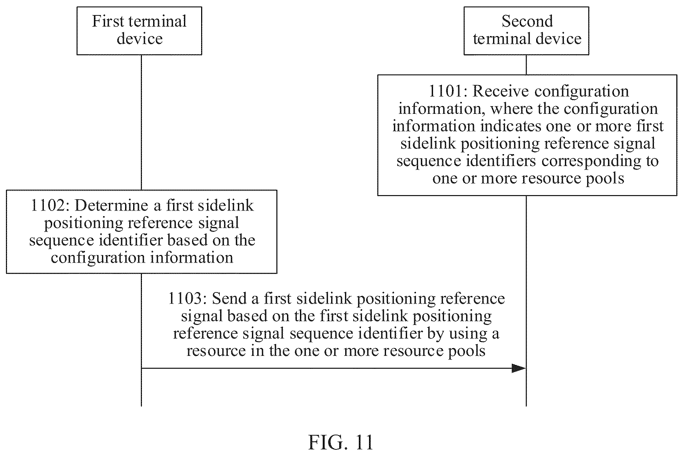

An embodiment of this application further provides another sidelink communication method. Refer to FIG. 11. A procedure of the method may include the following steps.

Step 1101: A second terminal device receives configuration information, where the configuration information indicates one or more first sidelink positioning reference signal sequence identifiers corresponding to one or more resource pools.

A correspondence between the one or more resource pools and the one or more first sidelink positioning reference signal sequence identifiers may have the following plurality of possibilities.

For example, the one or more resource pools may correspond to a same first sidelink positioning reference signal sequence identifier.

For another example, one resource pool may correspond to one first sidelink positioning reference signal sequence identifier. When there are a plurality of resource pools, the plurality of resource pools are in one-to-one correspondence with a plurality of first sidelink positioning reference signal sequence identifiers. For example, a resource pool 1 corresponds to a first sidelink positioning reference signal sequence identifier 1, a resource pool 2 corresponds to a first sidelink positioning reference signal sequence identifier 2, and a resource pool 3 corresponds to a first sidelink positioning reference signal sequence identifier 3. It should be understood that the foregoing examples are merely examples, and there may be another correspondence. This is not limited in this application.

For another example, a part of a plurality of resource pools corresponds to one first sidelink positioning reference signal sequence identifier, and the other part of the resource pools corresponds to another first sidelink positioning reference signal sequence identifier. For example, a resource pool 1 and a resource pool 2 correspond to a first sidelink positioning reference signal sequence identifier 1, and a resource pool 3 and a resource pool 4 correspond to a first sidelink positioning reference signal sequence identifier 2. For another example, a resource pool 1 and a resource pool 2 correspond to a first sidelink positioning reference signal sequence identifier 1, a resource pool 3 corresponds to a first sidelink positioning reference signal sequence identifier 2, and a resource pool 4 corresponds to a first sidelink positioning reference signal sequence identifier 3. It should be understood that the foregoing examples are merely examples, and there may be another correspondence. This is not limited in this application.

It should be understood that the foregoing correspondence is merely an example for description, and there may be other correspondences, which are not listed one by one in this application.

In some embodiments, that the second terminal device receives the configuration information may include the following method d1 and method d2 in different scenarios.

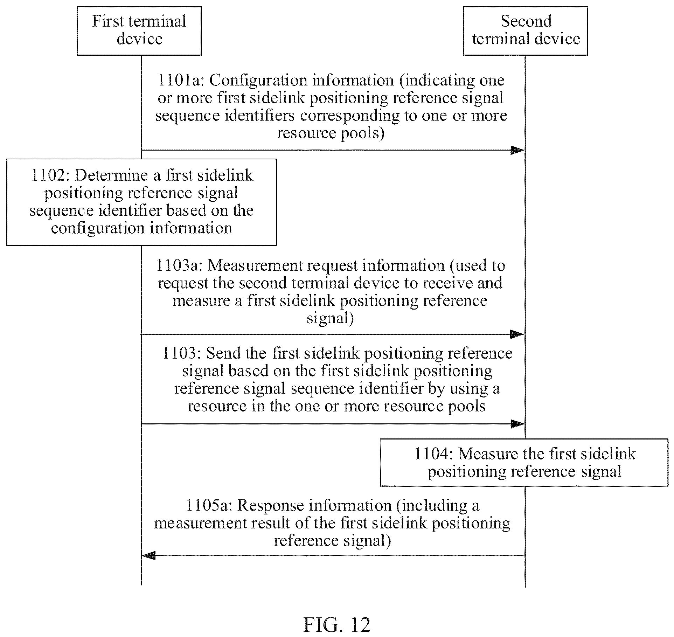

Method d1: The second terminal device receives the configuration information from a first terminal device, for example, step 1101a shown in FIG. 12.

For example, the first terminal device may send the configuration information to the second terminal device by using an SLPP protocol. Herein, it may be understood as that the configuration information is SLPP configuration information.

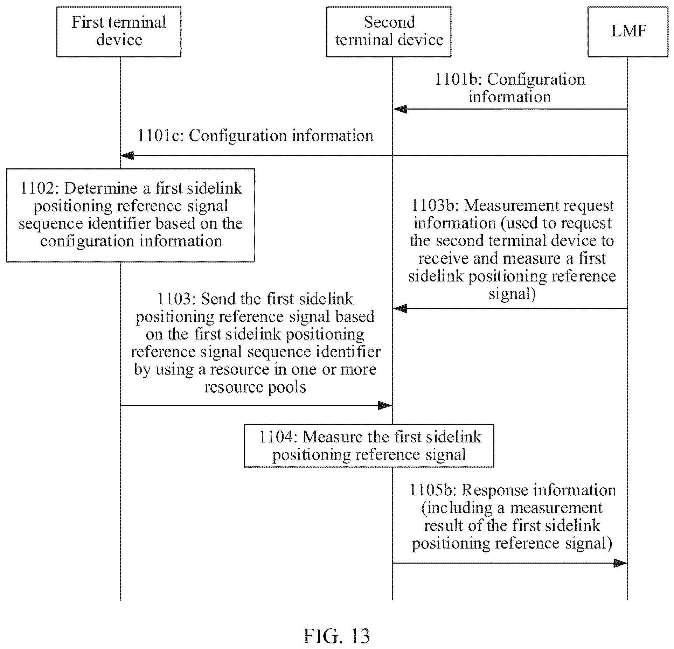

Method d2: The second terminal device receives the configuration information from an LMF, for example, step 1101b shown in FIG. 13.

For example, the LMF may send the configuration information to the second terminal device by using an LPP protocol. Herein, it may be understood as that the configuration information is LPP configuration information.

In a scenario corresponding to the method d2, the LMF may send the configuration information to the first terminal device, for example, step 1101c in FIG. 13. Similarly, the LMF may send the configuration information to the first terminal device by using the LPP protocol. Herein, it may be understood as that the configuration information is LPP configuration information.

The first terminal device may be understood as a to-be-positioned terminal device, or may be referred to as a transmit-end terminal device. The second terminal device may be understood as a terminal device that performs positioning measurement, or may be referred to as a receive-end terminal device. It should be noted that this application is described by using only an example in which the receive-end terminal device is the second terminal device. Optionally, there may be one or more receive-end terminal devices. For example, a plurality of terminal devices such as the second terminal device and a third terminal device are included. Details are not described in this application.

For example, when the first terminal device needs to perform positioning measurement via the third terminal device, the LMF may further send the configuration information to the third terminal device.

In an optional manner e1, the configuration information may include the one or more first sidelink positioning reference signal sequence identifiers and identifiers of the one or more resource pools.

In the manner e1, it may be understood as that the configuration information includes a correspondence between the one or more first sidelink positioning reference signal sequence identifiers and the identifiers of the one or more resource pools.

For example, the configuration information may include {first sidelink positioning reference signal sequence identifier 1, resource pool 1}.

For another example, the configuration information may include {first sidelink positioning reference signal sequence identifier 1, resource pool 1, resource pool 2, resource pool 3}.

For another example, the configuration information may include {first sidelink positioning reference signal sequence identifier 1, resource pool 1}, {first sidelink positioning reference signal sequence identifier 2, resource pool 2}, and {first sidelink positioning reference signal sequence identifier 3, resource pool 3}.

For another example, the configuration information may include {first sidelink positioning reference signal sequence identifier 1, resource pool 1, resource pool 2}, {first sidelink positioning reference signal sequence identifier 2, resource pool 3}, and {first sidelink positioning reference signal sequence identifier 3, resource pool 4, resource pool 5}.

It should be understood that the foregoing examples are merely examples, and a plurality of other corresponding manners may be alternatively used. This is not limited in this application.

Optionally, in the manner e1, the configuration information may further include a type of the one or more resource pools, to accurately determine a corresponding resource pool. For example, the configuration information may include {first sidelink positioning reference signal sequence identifier 1, resource pool 1, type of the resource pool 1}. Other corresponding examples are similar, which are not described one by one herein again.

There may be two types of resource pools: a shared resource pool and a dedicated resource pool. The shared resource pool refers to that a resource in the resource pool can be used to send an SL-PRS, a PSCCH, and a physical sidelink shared channel (physical sidelink shared channel, PSSCH). The dedicated resource pool refers to that a resource in the resource pool can only be used to send an SL-PRS and a corresponding PSCCH.

In an optional manner e2, when one or more sidelink positioning reference signal sequence identifiers are preconfigured for a resource pool in the one or more resource pools, a first resource pool in the one or more resource pools is used as an example for description. The configuration information may include a first bit and an identifier of the first resource pool. The first bit indicates that one of the one or more sidelink positioning reference signal sequence identifiers preconfigured for the first resource pool is a first sidelink positioning reference signal sequence identifier corresponding to the first resource pool.

For example, the first bit may include a plurality of bits, and different values of the plurality of bits indicate indexes of different sidelink positioning reference signal sequence identifiers in the one or more sidelink positioning reference signal sequence identifiers.

In an example, four sidelink positioning reference signal sequence identifiers are preconfigured for the first resource pool, the first bit includes two bits, and four different values corresponding to the two bits may correspond to indexes of four different sidelink positioning reference signal sequence identifiers. For example, a correspondence between the indexes indicated by the values of the first bit and the sidelink positioning reference signal sequence identifiers may be shown in the following Table 3.

Table 3

| Sidelink positioning reference signal sequence identifier | Index of the sidelink positioning reference signal sequence identifier | Bit value |
|---|---|---|
| N1 | 0 | 00 |
| N2 | 1 | 01 |
| N3 | 2 | 10 |
| N4 | 3 | 11 |

It should be understood that the correspondence in Table 2 is merely an example, and is not intended to limit this application.

Table 2 is used as an example for description. When the configuration information indicates a correspondence between the first resource pool and N1, to be specific, the configuration information indicates that N1 is the first sidelink positioning reference signal sequence identifier corresponding to the first resource pool, the configuration information may include {00, identifier of the first resource pool}.

It should be understood that the foregoing uses only the first resource pool as an example for description. When there are a plurality of resource pools, for example, in addition to the first resource pool, one or more sidelink positioning reference signal sequence identifiers are also preconfigured for a second resource pool, the configuration information may further include a second bit, the second bit, and an identifier of the second resource pool, and the second bit indicates that one of the one or more sidelink positioning reference signal sequence identifiers preconfigured for the second resource pool is a first sidelink positioning reference signal sequence identifier corresponding to the second resource pool.

Similarly, the second bit may include a plurality of bits, and different values of the plurality of bits indicate indexes of different sidelink positioning reference signal sequence identifiers in the one or more sidelink positioning reference signal sequence identifiers.

For example, when the configuration information indicates a correspondence between the second resource pool and A, to be specific, the configuration information indicates that A is the first sidelink positioning reference signal sequence identifier corresponding to the second resource pool, assuming that an index of A is indicated by using a bit 11, the configuration information may include {11, identifier of the second resource pool}.

In an example, the configuration information may include {00, identifier of the first resource pool} and {11, identifier of the second resource pool}. In this case, the configuration information may indicate the first sidelink positioning reference signal sequence identifier corresponding to the first resource pool and the first sidelink positioning reference signal sequence identifier corresponding to the second resource pool.

It should be understood that indications of other resource pools are similar to indications of the first resource pool and the second resource pool, and are not described one by one herein again.

In the manner e2, the configuration information may also include a type of the resource pool. For example, the configuration information may include {00, identifier of the first resource pool, type of the first resource pool}. Other information is similar, and is not listed one by one herein again.

In some embodiments, the manner e1 and the manner e2 may also be combined for indication. This is not limited in this application. For example, the configuration information may include {first sidelink positioning reference signal sequence identifier 1, resource pool 1} and {00, identifier of the first resource pool}.

The second terminal device may determine, based on the configuration information, the one or more first sidelink positioning reference signal sequence identifiers corresponding to the one or more resource pools.

Optionally, before step 1101, both the first terminal device and the second terminal device need to configure an SL-PRS resource. Sidelink resource selection modes are different. In different modes, methods for configuring the SL-PRS resource by the first terminal device and the second terminal device are different. For example, refer to related descriptions of the method c1 and the method c2 in the embodiment shown in FIG. 4. Details are not described herein again, and are not shown in the figure again.

Step 1102: The first terminal device determines the first sidelink positioning reference signal sequence identifier based on the configuration information.

In a scenario corresponding to the method d1, the first terminal device determines the configuration information, and may directly determine the first sidelink positioning reference signal sequence identifier based on the configuration information.

In a scenario corresponding to the method d2, after receiving the configuration information, the first terminal device may determine the first sidelink positioning reference signal sequence identifier based on the configuration information.

It should be understood that a sequence of step 1101 and step 1102 is not limited, and only an example is used for description herein.

Step 1103: The first terminal device sends a first sidelink positioning reference signal to the second terminal device based on the first sidelink positioning reference signal sequence identifier by using a resource in the one or more resource pools. Correspondingly, the second terminal device receives the first sidelink positioning reference signal from the first terminal device based on the first sidelink positioning reference signal sequence identifier.

The first terminal device may generate the first sidelink positioning reference signal based on the first sidelink positioning reference signal sequence identifier, and further send the first sidelink positioning reference signal to the second terminal device.

For example, for a method for generating the first sidelink positioning reference signal by the first terminal device based on the first sidelink positioning reference signal sequence identifier, refer to Formula 1 and Formula 2 in the embodiment shown in FIG. 4. Details are not described herein again.

Optionally, the first sidelink positioning reference signal may be a group of signals, that is, the first sidelink positioning reference signal may include one or more signals. When the first sidelink positioning reference signal includes one signal, the first terminal device may send the first sidelink positioning reference signal to the second terminal device based on a resource in one resource pool. In this case, the first sidelink positioning reference signal is generated based on a first sidelink positioning reference signal sequence identifier corresponding to the resource pool. When the first sidelink positioning reference signal includes a plurality of signals, the first terminal device may jointly send the first sidelink positioning reference signal to the second terminal device based on resources in a plurality of resource pools. In this case, the first sidelink positioning reference signal is generated based on first sidelink positioning reference signal sequence identifiers respectively corresponding to the plurality of resource pools.

In an optional implementation, in the scenario corresponding to the method d1, before and after step 1103, as shown in FIG. 12, the first terminal device or the second terminal device may further perform the following steps.

Step 1103a: The first terminal device sends measurement request information to the second terminal device, where the measurement request information is used to request the second terminal device to receive and measure the first sidelink positioning reference signal. Correspondingly, the second terminal device receives the measurement request information from the first terminal device.

Optionally, the measurement request information may be carried in the configuration information sent by the first terminal device.

Optionally, the measurement request information and the configuration information may be carried in a same message, or may be carried in different messages. This is not limited in this application.

Step 1104: The second terminal device measures the first sidelink positioning reference signal.

Step 1105a: The second terminal device sends response information to the first terminal device, where the response information includes a measurement result of the first sidelink positioning reference signal. Correspondingly, the first terminal device receives the response information from the second terminal device.

It should be understood that step 1105a is merely shown by using an example in which the second terminal device sends the measurement result of the first sidelink positioning reference signal by sending the response information, and is not intended to limit this application. Optionally, the second terminal device may directly send the measurement result of the first sidelink positioning reference signal to the first terminal device, or send the measurement result of the first sidelink positioning reference signal by using another message.

In another optional implementation, in the scenario corresponding to the method d2, before and after step 1103, as shown in FIG. 13, the LMF or the second terminal device may further perform the following steps.

Step 1103b: The LMF sends measurement request information to the second terminal device, where the measurement request information is used to request the second terminal device to receive and measure the first sidelink positioning reference signal. Correspondingly, the second terminal device receives the measurement request information from the LMF.

Optionally, the measurement request information may be carried in the configuration information sent by the LMF to the second terminal device.

Optionally, the measurement request information and the configuration information may be carried in a same message, or may be carried in different messages. This is not limited in this application.

Step 1104: The second terminal device measures the first sidelink positioning reference signal.

Step 1105b: The second terminal device sends response information to the LMF, where the response information includes a measurement result of the first sidelink positioning reference signal. Correspondingly, the LMF receives the response information from the second terminal device.

It should be understood that step 1105b is merely shown by using an example in which the second terminal device sends the measurement result of the first sidelink positioning reference signal by sending the response information, and is not intended to limit this application. Optionally, the second terminal device may directly send the measurement result of the first sidelink positioning reference signal to the LMF, or send the measurement result of the first sidelink positioning reference signal by using another message.

In the foregoing method, for a user privacy service or a value-added service, a resource pool-level method for configuring a private sidelink positioning reference signal sequence identifier is used, so that the first terminal device can send a signal by using a resource pool for which the private sidelink positioning reference signal sequence identifier has been configured, to meet a positioning demand of a privacy requirement.

In some embodiments, the first terminal device may send a second sidelink positioning reference signal to the second terminal device based on a second sidelink positioning reference signal sequence identifier by using a resource in a resource pool other than the one or more resource pools. In this way, for a public or security service, a signal may be sent by using a resource pool for which no private sidelink positioning reference signal sequence identifier is configured, to meet a positioning demand of a non-privacy requirement.

Correspondingly, the second terminal device receives the second sidelink positioning reference signal from the first terminal device based on the second sidelink positioning reference signal sequence identifier.

When detecting that the first terminal device sends the sidelink positioning reference signal by using the resource in the resource pool other than one or more resource pools, the second terminal device receives the second sidelink positioning reference signal based on the second sidelink positioning reference signal sequence identifier.

For example, the second sidelink positioning reference signal sequence identifier is a PSCCH CRC.

In an example, the second terminal device measures the second sidelink positioning reference signal, and sends a measurement result of the second sidelink positioning reference signal to the first terminal device.

The second terminal device may receive, from the first terminal device, information used to request the second terminal device to receive and measure the second sidelink positioning reference signal.

In another example, the second terminal device measures the second sidelink positioning reference signal, and sends a measurement result of the second sidelink positioning reference signal to the LMF.

The second terminal device may receive, from the LMF, information used to request the second terminal device to receive and measure the second sidelink positioning reference signal.

Based on the foregoing embodiments, an embodiment of this application further provides a communication apparatus. For a diagram of the communication apparatus, still refer to FIG. 9. It should be understood that related descriptions of the units included in the communication apparatus shown in FIG. 9 are also applicable herein. For details, refer to the foregoing descriptions of the communication apparatus shown in FIG. 9. Details are not described herein again.

For example, the communication apparatus 900 may be specifically the first terminal device in embodiments shown in FIG. 11 to FIG. 13, or a processor, a chip, a chip system, a function module, or the like in the first terminal device. Alternatively, the communication apparatus 900 may be specifically the second terminal device in embodiments shown in FIG. 11 to FIG. 13, or a processor, a chip, a function module, or the like in the second terminal device. Alternatively, the communication apparatus 900 may be specifically the LMF in the embodiment shown in FIG. 13, or a processor, a chip, a chip system, a function module, or the like in the LMF.

In an embodiment, the communication apparatus 900 is configured to implement functions of the second terminal device in the embodiment shown in FIG. 11, FIG. 12, or FIG. 13.

The transceiver unit 901 may be configured to receive configuration information, where the configuration information indicates one or more first sidelink positioning reference signal sequence identifiers corresponding to one or more resource pools; and receive a first sidelink positioning reference signal from a first terminal device based on the first sidelink positioning reference signal sequence identifier, where the first sidelink positioning reference signal is sent by using a resource in the one or more resource pools. The processing unit 902 may be configured to control an operation of the transceiver unit 901.

In an optional implementation, the transceiver unit 901 may be further configured to receive a second sidelink positioning reference signal from the first terminal device based on a second sidelink positioning reference signal sequence identifier, where the second sidelink positioning reference signal is sent by using a resource in a resource pool other than the one or more resource pools.

Optionally, when receiving the configuration information, the transceiver unit 901 may be configured to receive the configuration information from the first terminal device; or receive the configuration information from a positioning server.

In an example, the processing unit 902 may be further configured to measure the first sidelink positioning reference signal. The transceiver unit 901 may be further configured to send a measurement result of the first sidelink positioning reference signal to the first terminal device.

In a possible manner, the transceiver unit 901 may be further configured to receive measurement request information from the first terminal device, where the measurement request information is used to request the second terminal device to receive and measure the first sidelink positioning reference signal.

In another example, the processing unit 902 may be further configured to measure the first sidelink positioning reference signal. The transceiver unit 901 may be further configured to send a measurement result of the first sidelink positioning reference signal to the positioning server.

In another possible manner, the transceiver unit 901 may be further configured to receive measurement request information from the positioning server, where the measurement request information is used to request the second terminal device to receive and measure the first sidelink positioning reference signal.

In another embodiment, the communication apparatus 900 is configured to implement functions of the first terminal device in the embodiment shown in FIG. 11, FIG. 12, or FIG. 13.

The processing unit 902 may be configured to determine a first sidelink positioning reference signal sequence identifier based on configuration information, where the configuration information indicates one or more first sidelink positioning reference signal sequence identifiers corresponding to one or more resource pools. The transceiver unit 901 may be configured to send a first sidelink positioning reference signal to a second terminal device based on the first sidelink positioning reference signal sequence identifier by using a resource in the one or more resource pools.

In an optional implementation, the transceiver unit 901 may be further configured to send a second sidelink positioning reference signal to the second terminal device based on a second sidelink positioning reference signal sequence identifier by using a resource in a resource pool other than the one or more resource pools.

In an example, the transceiver unit 901 may be further configured to send the configuration information to the second terminal device.

In another example, the transceiver unit 901 may be further configured to receive the configuration information from a positioning server.

In a possible manner, the transceiver unit 901 may be further configured to receive a measurement result of the first sidelink positioning reference signal from the second terminal device.

The transceiver unit 901 may be further configured to send measurement request information to the second terminal device, where the measurement request information is used to request the second terminal device to receive and measure the first sidelink positioning reference signal.

In another embodiment, the communication apparatus 900 is configured to implement functions of the LMF in the embodiment shown in FIG. 13.

The transceiver unit 901 may be configured to send configuration information to a first terminal device and a second terminal device, where the configuration information indicates one or more first sidelink positioning reference signal sequence identifiers corresponding to one or more resource pools, and sidelink communication is performed between the first terminal device and the second terminal device. The processing unit 902 may be configured to control an operation of the transceiver unit 901.

For example, the transceiver unit 901 may be further configured to receive a measurement result of a first sidelink positioning reference signal from the second terminal device, where the first sidelink positioning reference signal corresponds to the first sidelink positioning reference signal sequence identifier.

The transceiver unit 901 may be further configured to send measurement request information to the second terminal device, where the measurement request information is used to request the second terminal device to receive and measure the first sidelink positioning reference signal.

With reference to the foregoing embodiment, the following examples are provided.

In an example, the configuration information includes the one or more first sidelink positioning reference signal sequence identifiers and identifiers of the one or more resource pools.

Optionally, the configuration information further includes a type of the one or more resource pools.

In another example, when one or more sidelink positioning reference signal sequence identifiers are preconfigured for a first resource pool, the configuration information includes a first bit and an identifier of the first resource pool, the first bit indicates that one of the one or more sidelink positioning reference signal sequence identifiers preconfigured for the first resource pool is a first sidelink positioning reference signal sequence identifier corresponding to the first resource pool, and the first resource pool is any one of the one or more resource pools.

Optionally, the configuration information further includes a type of the first resource pool.

For example, the first bit includes a plurality of bits, and different values of the plurality of bits indicate indexes of different sidelink positioning reference signal sequence identifiers in the one or more sidelink positioning reference signal sequence identifiers.

In a possible manner, the second sidelink positioning reference signal sequence identifier is a PSCCH CRC.

Based on the foregoing embodiments, an embodiment of this application further provides a communication apparatus. For a diagram of the communication apparatus, still refer to FIG. 10. It should be understood that related descriptions of the components included in the communication apparatus shown in FIG. 10 are also applicable herein. For details, refer to the foregoing descriptions of the communication apparatus shown in FIG. 10. Details are not described herein again.

For example, the communication apparatus 1000 may be specifically the first terminal device in embodiments shown in FIG. 11 to FIG. 13, or may be the second terminal device in embodiments shown in FIG. 11 to FIG. 13, or may be the LMF in the embodiment shown in FIG. 13. Alternatively, the communication apparatus 1000 may be a chip or the like.

In an embodiment, when the communication apparatus 1000 implements functions of the second terminal device in the embodiment shown in FIG. 11, FIG. 12, or FIG. 13, the transceiver 1001 may implement receiving and sending operations performed by the second terminal device in the embodiment shown in FIG. 11, FIG. 12, or FIG. 13, and the processor 1002 may implement an operation other than the receiving and sending operations performed by the second terminal device in the embodiment shown in FIG. 11, FIG. 12, or FIG. 13. Specifically, for related specific descriptions, refer to related descriptions in the embodiment shown in FIG. 11, FIG. 12, or FIG. 13. Details are not described herein again.

In another embodiment, when the communication apparatus 1000 implements functions of the first terminal device in the embodiment shown in FIG. 11, FIG. 12, or FIG. 13, the transceiver 1001 may implement receiving and sending operations performed by the first terminal device in the embodiment shown in FIG. 11, FIG. 12, or FIG. 13, and the processor 1002 may implement an operation other than the receiving and sending operations performed by the first terminal device in the embodiment shown in FIG. 11, FIG. 12, or FIG. 13. Specifically, for related specific descriptions, refer to related descriptions in the foregoing embodiments. Details are not described herein again.

In another embodiment, when the communication apparatus 1000 implements functions of the LMF in the embodiment shown in FIG. 13, the transceiver 1001 may implement receiving and sending operations performed by the LMF in the embodiment shown in FIG. 13, and the processor 1002 may implement an operation other than the receiving and sending operations performed by the LMF in the embodiment shown in FIG. 13. Specifically, for related specific descriptions, refer to related descriptions in the embodiment shown in FIG. 13. Details are not described herein again.

In another embodiment, when the communication apparatus 1000 is a chip, the communication apparatus 1000 includes a transceiver 1001 and a processor 1002, but does not include a memory. The transceiver 1001 exists as an input/output interface, and the input/output interface is used by a chip to implement receiving and sending of the communication apparatus 1000. The input/output interface may include an input interface and/or an output interface. The input interface may implement receiving of the communication apparatus 1000, and the output interface may be configured to implement sending of the communication apparatus 1000.

Optionally, when the communication apparatus 1000 is a chip, when the chip implements functions of the second terminal device in the embodiment shown in FIG. 11, FIG. 12, or FIG. 13, the input/output interface may implement receiving and sending operations performed by the second terminal device in the embodiment shown in FIG. 11, FIG. 12, or FIG. 13, and the processor 1002 may implement an operation other than the receiving and sending operations performed by the second terminal device in the embodiment shown in FIG. 11, FIG. 12, or FIG. 13. Specifically, for related specific descriptions, refer to related descriptions in the embodiment shown in FIG. 11, FIG. 12, or FIG. 13. Details are not described herein again.

Optionally, when the communication apparatus 1000 is a chip, when the chip implements functions of the first terminal device in the embodiment shown in FIG. 11, FIG. 12, or FIG. 13, the input/output interface may implement receiving and sending operations performed by the first terminal device in the embodiment shown in FIG. 11, FIG. 12, or FIG. 13, and the processor 1002 may implement an operation other than the receiving and sending operations performed by the first terminal device in the embodiment shown in FIG. 11, FIG. 12, or FIG. 13. Specifically, for related specific descriptions, refer to related descriptions in the embodiment shown in FIG. 11, FIG. 12, or FIG. 13. Details are not described herein again.

Optionally, when the communication apparatus 1000 is a chip, when the chip implements functions of the LMF in the embodiment shown in FIG. 13, the input/output interface may implement receiving and sending operations performed by the LMF in the embodiment shown in FIG. 13, and the processor 1002 may implement an operation other than the receiving and sending operations performed by the LMF in the embodiment shown in FIG. 13. Specifically, for related specific descriptions, refer to related descriptions in the embodiment shown in FIG. 13. Details are not described herein again.

Based on the foregoing embodiments, an embodiment of this application provides a communication system. The communication system may include the first terminal device, the second terminal device, and the like in the foregoing embodiments.

Based on the foregoing embodiments, an embodiment of this application provides another communication system. The communication system may include the first terminal device, the second terminal device, the LMF, and the like in the foregoing embodiments.

An embodiment of this application further provides a computer-readable storage medium. The computer-readable storage medium is configured to store a computer program. When the computer program is executed by a computer, the computer may implement the sidelink communication methods provided in the method embodiments.

An embodiment of this application further provides a computer program product. The computer program product is configured to store a computer program. When the computer program is executed by a computer, the computer may implement the sidelink communication methods provided in the method embodiments.

An embodiment of this application further provides a chip, including a processor. The processor is coupled to a memory, and is configured to invoke a program in the memory, so that the chip implements the sidelink communication methods provided in the method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A sidelink communication method, comprising:

   receiving, by a second terminal device, configuration information, wherein the configuration information indicates one or more first sidelink positioning reference signal sequence identifiers corresponding to one or more resource pools; and
   receiving, by the second terminal device, a first sidelink positioning reference signal from a first terminal device based on the first sidelink positioning reference signal sequence identifier, wherein the first sidelink positioning reference signal is sent by using a resource in the one or more resource pools.

2. The method according to claim 1, wherein the method further comprises:
   receiving, by the second terminal device, a second sidelink positioning reference signal from the first terminal device based on a second sidelink positioning reference signal sequence identifier, wherein the second sidelink positioning reference signal is sent by using a resource in a resource pool other than the one or more resource pools.

3. The method according to claim 2, wherein the second sidelink positioning reference signal sequence identifier is a physical sidelink control channel PSCCH cyclic redundancy check CRC.

4. The method according to any one of claims 1 to 3, wherein receiving, by the second terminal device, the configuration information comprises:

   receiving, by the second terminal device, the configuration information from the first terminal device; or
   receiving, by the second terminal device, the configuration information from a positioning server.

5. The method according to any one of claims 1 to 4, wherein the method further comprises:

   measuring, by the second terminal device, the first sidelink positioning reference signal; and
   sending, by the second terminal device, a measurement result of the first sidelink positioning reference signal to the first terminal device.

6. The method according to any one of claims 1 to 5, wherein the method further comprises:
   receiving, by the second terminal device, measurement request information from the first terminal device, wherein the measurement request information is used to request the second terminal device to receive and measure the first sidelink positioning reference signal.

7. The method according to any one of claims 1 to 4, wherein the method further comprises:

   measuring, by the second terminal device, the first sidelink positioning reference signal; and
   sending, by the second terminal device, a measurement result of the first sidelink positioning reference signal to the positioning server.

8. The method according to any one of claims 1 to 4 and 7, wherein the method further comprises:
   receiving, by the second terminal device, measurement request information from the positioning server, wherein the measurement request information is used to request the second terminal device to receive and measure the first sidelink positioning reference signal.

9. A sidelink communication method, comprising:

   determining, by a first terminal device, a first sidelink positioning reference signal sequence identifier based on configuration information, wherein the configuration information indicates one or more first sidelink positioning reference signal sequence identifiers corresponding to one or more resource pools; and
   sending, by the first terminal device, a first sidelink positioning reference signal to a second terminal device based on the first sidelink positioning reference signal sequence identifier by using a resource in the one or more resource pools.

10. A sidelink communication method, comprising:
    sending, by a positioning server, configuration information to a first terminal device and a second terminal device, wherein the configuration information indicates one or more first sidelink positioning reference signal sequence identifiers corresponding to one or more resource pools, and sidelink communication is performed between the first terminal device and the second terminal device.

11. The method according to any one of claims 1 to 10, wherein the configuration information comprises the one or more first sidelink positioning reference signal sequence identifiers and an identifier of the one or more resource pools.

12. The method according to claim 11, wherein the configuration information further comprises a type of the one or more resource pools.

13. The method according to any one of claims 1 to 11, wherein when one or more sidelink positioning reference signal sequence identifiers are preconfigured for a first resource pool, the configuration information comprises a first bit and an identifier of the first resource pool, the first bit indicates that one of the one or more sidelink positioning reference signal sequence identifiers preconfigured for the first resource pool is the first sidelink positioning reference signal sequence identifier corresponding to the first resource pool, and the first resource pool is any one of the one or more resource pools.

14. The method according to claim 13, wherein the configuration information further comprises a type of the first resource pool.

15. The method according to claim 13 or 14, wherein the first bit comprises a plurality of bits, and different values of the plurality of bits indicate indexes of different sidelink positioning reference signal sequence identifiers in the one or more sidelink positioning reference signal sequence identifiers.

16. A communication apparatus, comprising a module or unit configured to perform the method according to any one of claims 1 to 8 or 11 to 15, or comprising a module or unit configured to perform the method according to claim 9 or any one of claims 11 to 15, or comprising a module or unit configured to perform the method according to any one of claims 10 to 15.

17. A computer-readable storage medium, wherein the computer-readable storage medium stores computer-executable instructions, and when being invoked by the computer, the computer-executable instructions are used to perform the method according to any one of claims 1 to 15.

18. A chip, comprising a processor, wherein the processor is coupled to a memory, and is configured to read and execute program instructions stored in the memory, to implement the method according to any one of claims 1 to 15.

FIG. 1

FIG. 2

PC5

Terminal device 1          Terminal device 2

FIG. 3

| First terminal device | | Second terminal device |

401: Sidelink control information (including indication information, which is used to determine a sidelink positioning reference signal sequence identifier)

402: Determine the sidelink positioning reference signal sequence identifier based on the indication information

403: Generate a sidelink positioning reference signal based on the sidelink positioning reference signal sequence identifier

404: Sidelink positioning reference signal

FIG. 4

| SLPP | | SLPP |
| RRC | | RRC |
| PDCP | | PDCP |
| RLC | | RLC |
| MAC | | MAC |
| L1 | | L1 |

PC5

Transmit-end
terminal device

Receive-end
terminal device

FIG. 5

| PSCCH data | CRC |

FIG. 6

First terminal
device

Second
terminal device

400a: Preconfigure a sidelink positioning reference signal resource

401: Sidelink control information (including indication
information, which is used to determine a sidelink
positioning reference signal sequence identifier)

402: Determine the sidelink
positioning reference signal
sequence identifier based on the
indication information

403: Generate a sidelink positioning
reference signal based on the
sidelink positioning reference signal
sequence identifier

404: Sidelink positioning reference signal

405: Measure the sidelink positioning
reference signal

406: Response information (including a measurement
result of the sidelink positioning reference signal)

FIG. 7

| First terminal device | Second terminal device | Network device | LMF |
|---|---|---|---|

400b: Location request information

400c: Configuration information of a sidelink positioning reference signal

401: Sidelink control information (including indication information, which is used to determine a sidelink positioning reference signal sequence identifier)

402: Determine the sidelink positioning reference signal sequence identifier based on the indication information

403: Generate the sidelink positioning reference signal based on the sidelink positioning reference signal sequence identifier

404: Sidelink positioning reference signal

405: Measure the sidelink positioning reference signal

406: Response information (including a measurement result of the sidelink positioning reference signal)

FIG. 8

900

Communication apparatus

901

Transceiver
unit

902

Processing unit

FIG. 9

1000

Communication apparatus

1001

Transceiver

1002

Processor

1004

1003

Memory

FIG. 10

First terminal device

Second terminal device

1101: Receive configuration information, where the configuration information indicates one or more first sidelink positioning reference signal sequence identifiers corresponding to one or more resource pools

1102: Determine a first sidelink positioning reference signal sequence identifier based on the configuration information

1103: Send a first sidelink positioning reference signal based on the first sidelink positioning reference signal sequence identifier by using a resource in the one or more resource pools

FIG. 11

| First terminal device | | Second terminal device |
| --- | --- | --- |

1101a: Configuration information (indicating one or more first sidelink positioning reference signal sequence identifiers corresponding to one or more resource pools)

1102: Determine a first sidelink positioning reference signal sequence identifier based on the configuration information

1103a: Measurement request information (used to request the second terminal device to receive and measure a first sidelink positioning reference signal)

1103: Send the first sidelink positioning reference signal based on the first sidelink positioning reference signal sequence identifier by using a resource in the one or more resource pools

1104: Measure the first sidelink positioning reference signal

1105a: Response information (including a measurement result of the first sidelink positioning reference signal)

FIG. 12

| First terminal device | Second terminal device | LMF |
|---|---|---|

1101b: Configuration information

1101c: Configuration information

1102: Determine a first sidelink positioning reference signal sequence identifier based on the configuration information

1103b: Measurement request information (used to request the second terminal device to receive and measure a first sidelink positioning reference signal)

1103: Send the first sidelink positioning reference signal based on the first sidelink positioning reference signal sequence identifier by using a resource in one or more resource pools

1104: Measure the first sidelink positioning reference signal

1105b: Response information (including a measurement result of the first sidelink positioning reference signal)

FIG. 13

## INTERNATIONAL SEARCH REPORT

| International application No. |
| --- |
| **PCT/CN2024/086432** |

| A. | CLASSIFICATION OF SUBJECT MATTER |
| --- | --- |
| | H04W64/00(2009.01)i; H04W4/02(2018.01)i |

According to International Patent Classification (IPC) or to both national classification and IPC

| B. | FIELDS SEARCHED |
| --- | --- |

Minimum documentation searched (classification system followed by classification symbols)

    IPC:H04W

Documentation searched other than minimum documentation to the extent that such documents are included in the fields searched

Electronic data base consulted during the international search (name of data base and, where practicable, search terms used)

    CNABS, CNTXT, VEN, USTXT, EPTXT, WOTXT, CNKI, 3GPP: 侧, 旁, 边, 副, 链路, 直接, 直连, 机器到机器, 定位, 位置, 参考信号, 序列, 标识, 资源, sidelink, M2M, V2X, direct communication, position, reference signal, sequence, ID, resource

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 111093154 A (ZTE CORP.) 01 May 2020 (2020-05-01)<br>    description, paragraphs [0058]-[0096] | 1-18 |
| A | CN 115280860 A (QUALCOMM INC.) 01 November 2022 (2022-11-01)<br>    entire document | 1-18 |
| A | CN 114080772 A (LG ELECTRONICS INC.) 22 February 2022 (2022-02-22)<br>    entire document | 1-18 |
| A | US 2022191830 A1 (APPLE INC.) 16 June 2022 (2022-06-16)<br>    entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 June 2024** | **15 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 657 936 A1**

| INTERNATIONAL SEARCH REPORT | | International application No. |
| :---: | :---: | :---: |
| Information on patent family members | | **PCT/CN2024/086432** |

| Patent document cited in search report | | | Publication date (day/month/year) | Patent family member(s) | | | Publication date (day/month/year) |
| :---: | :---: | :---: | :---: | :---: | :---: | :---: | :---: |
| CN | 111093154 | A | 01 May 2020 | EP | 4033788 | A1 | 27 July 2022 |
| | | | | US | 2022377697 | A1 | 24 November 2022 |
| | | | | WO | 2021051905 | A1 | 25 March 2021 |
| CN | 115280860 | A | 01 November 2022 | WO | 2021188208 | A1 | 23 September 2021 |
| | | | | TW | 202137785 | A | 01 October 2021 |
| | | | | JP | 2023518708 | A | 08 May 2023 |
| | | | | US | 2021297206 | A1 | 23 September 2021 |
| | | | | US | 11601235 | B2 | 07 March 2023 |
| | | | | EP | 4122255 | A1 | 25 January 2023 |
| | | | | BR | 112022018215 | A2 | 25 October 2022 |
| | | | | KR | 20220155429 | A | 22 November 2022 |
| CN | 114080772 | A | 22 February 2022 | KR | 20210130817 | A | 01 November 2021 |
| | | | | WO | 2020222603 | A1 | 05 November 2020 |
| | | | | US | 2022239438 | A1 | 28 July 2022 |
| | | | | EP | 3944545 | A1 | 26 January 2022 |
| | | | | EP | 3944545 | A4 | 27 April 2022 |
| US | 2022191830 | A1 | 16 June 2022 | WO | 2020205891 | A1 | 08 October 2020 |
| | | | | KR | 20210132185 | A | 03 November 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310433336

- CN 202311018447